# EUROPEAN PATENT SPECIFICATION

(11) **EP 1 701 006 B1**
(45) Date of publication and mention of the grant of the patent: **05.10.2016**
(21) Application number: 06101628.3
(22) Date of filing: 14.02.2006
(51) Int. Cl.: F01K 17/04, F01K 23/10, C02F 1/06, C02F 1/16, C02F 103/08

(54) **Electric power-generating and desalination combined plant and operation method of the same**
Kombikraftwerk zur Erzeugung elektrischer Energie und zur Wasserentsalzung und Verfahren zu dessen Betrieb
Centrale combinée pour la génération d'énergie électrique et de dessalement de l'eau et son procédé de mise en oeuvre

(30) Priority: 22.02.2005 JP 2005045868
(43) Date of publication of application: 13.09.2006
(73) Proprietor: Kabushiki Kaisha Toshiba, Tokyo 105-8001 (JP)
(72) Inventor: Goto, Koichi, c/o Toshiba Corporation, Minato-ku, Tokyo, 105-8001 (JP); Sugimori, Yoichi, c/o Toshiba Corporation, Minato-ku, Tokyo, 105-8001 (JP)
(74) Representative: Henkel, Breuer & Partner

(56) References cited:
- EP-A1- 1 413 554
- DE-A1- 2 700 737
- JP-A- S51 107 277
- JP-A- S63 208 628

## Description

The present invention relates to a combined plant of a combined-cycle electric power-generating facility and a desalination facility utilizing steam discharged from the electric power-generating facility, and a method of operating of the same. Such an electric power-generating and desalination combined plant is disclosed in document DE 2700737 A1.

In recent years, an electric power-generating and desalination combined plant has rapidly increased in which a combined-cycle electric power-generating facility is combined with a desalination facility for manufacturing freshwater from water including a solute dissolved therein by use of steam discharged from the electric power-generating facility.

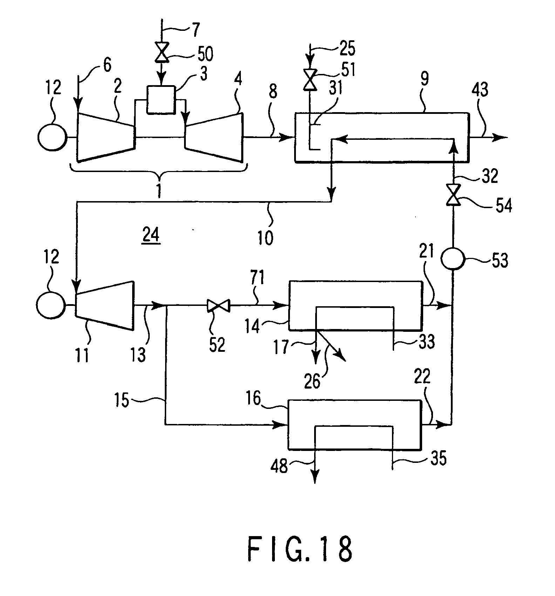

FIG. 18 is a constitution diagram showing an example of an electric power-generating and desalination combined plant in a case where seawater is desalinated in a desalination facility.

In FIG. 18, the combined-cycle electric power-generating facility is a plant in which electric power is generated by a gas turbine 1. Moreover, the electric power is generated by a steam turbine 11 which is operated by steam 10 generated by an exhaust gas boiler 9 by use of a combustion exhaust gas 8 of the gas turbine 1 as a heat source.

The gas turbine 1 is constituted of a compressor 2, a combustor 3, and an expander 4. The compressor 2 introduces and compresses outside air to obtain combustion air 6. The combustor 3 burns a gas turbine fuel 7 flowing into the combustor via a fuel flow rate adjustment valve 50 by use of the compressed combustion air 6, and the fuel is passed through the expander 4 to manufacture the combustion exhaust gas 8 at a high temperature. For example, a natural gas is used as the gas turbine fuel 7. The gas turbine 1 rotates by use of the combustion exhaust gas 8, and operates an electric power generator 12 connected to a rotation shaft to generate the electric power.

In addition, the combustion exhaust gas 8 discharged from the expander 4 is guided into the exhaust gas boiler 9, and supply water 32 is heated by heat recovered from the combustion exhaust gas 8 to generate the steam 10. At this time, a duct combustor 31 disposed in the exhaust gas boiler 9 supports the combustion if necessary. As to a duct combustor fuel 25 made of, for example, the natural gas supplied to the duct combustor 31, a flow rate of the fuel gas is adjusted by a flow rate adjustment valve 51, and the combustion support is controlled. The combustion exhaust gas 8 generated by the duct combustor 31 passes through the exhaust gas boiler 9 while being used to generate the steam 10 and cooled, and the cooled gas is discharged to atmospheric air together with an exhaust gas 43.

On the other hand, the steam 10 generated by heating the supply water 32 in the exhaust gas boiler 9 is guided to the steam turbine 11 to rotate this steam turbine 11, and the electric power generator 12 connected to the rotation shaft of the steam turbine is operated to generate the electric power.

Exhaust steam 13 discharged from the steam turbine 11 is guided as desalination-facility heat source steam 71 into a desalination facility 14 through a flow rate adjustment valve 52, and surplus steam 15 is guided to a damp condenser 16. Examples of the desalination facility 14 include a multistage flash system and a multistage utility system, and the multistage utility system is adopted in the facility shown in FIG. 18.

In the desalination facility 14, seawater 33 pumped up from the sea by a pump (not shown) is evaporated by heat recovered from the turbine exhaust steam 13, and separated into freshwater steam and concentrated brine 17. The freshwater steam is condensed into freshwater 26. This freshwater 26 is collected in, for example, a tank (not shown) for use in drinking water or the like, and the concentrated brine is discarded to the sea.

Moreover, the damp condenser 16 is a steam condenser which cools the surplus steam 15 by use of cooling seawater 35 pumped up from the sea by a pump (not shown) to condense the steam, and the cooling seawater 35 for use in cooling the surplus steam in this steam condenser 16 is discharged as tail water 48 to the sea.

Furthermore, desalination facility outlet water 21 flowing out of an outlet of the desalination facility 14 is combined with damp condenser outlet water 22 flowing out of an outlet of the damp condenser 16, and water is conveyed as the supply water 32 to the exhaust gas boiler 9 via a water supply valve 54 by a pump 53.

Additionally, the electric power-generating and desalination combined plant constituted in this manner is operated to satisfy an electricity demand and a freshwater demand. In this case, a total consumption of the gas turbine fuel 7 and the duct combustor fuel 25 is preferably reduced as much as possible from viewpoints of effective utilization of energy and economical efficiency. However, since the electricity demand or the freshwater demand fluctuates with season, most of the year is a partial load operation period in a district where the yearly fluctuation is large.

The above-described electric power-generating and desalination combined plant 24 has two problems as follows.

In the electric power-generating and desalination combined plant constituted to output maximum values of the electricity demand and the freshwater demand, the following operation is performed in a case where the partial load operation to satisfy the output is carried out in accordance with the electricity demand or the freshwater demand which fluctuates with the season.

An operation load ratio of the gas turbine 1 and a combustion of the duct combustor 31 are adjusted, and generated electricity and freshwater are both set to have desired values or more. When a plurality of gas turbines 1 are installed in the plant 24, the number of operating gas turbines, the operation load ratio of the gas turbines and the combustion of the duct combustor 31 are adjusted.

In this case, outlet temperatures of all of the duct combustors need to be set to allowable temperatures or less from restrictions on heat resistances of materials for use in the exhaust gas boiler 9 and the duct combustor 31. A combined-cycle electric power generating efficiency is to be improved by appropriate adjustment to reduce total fuel consumption for the year, that is, the total consumption of the gas turbine fuel 7 and the duct combustor fuel 25.

Moreover, an increase of the demand for freshwater in a short time is sometimes encountered during operation of the electric power-generating and desalination combined plant. In this case, to increase a freshwater amount while a generated electric power amount remains at a desired value, this increase can be realized by lowering the operation load ratio of the gas turbine 1 and increasing the combustion support by the duct combustor 31.

In this case, the more the demand for freshwater is, the higher the outlet temperature of the duct combustor 31 becomes. However, since there is a possibility that this outlet temperature becomes more than the allowable temperature, there is a demand that the freshwater amount can be increased without lowering the operation load ratio of the gas turbine.

Moreover, if the combustion support by the duct combustor 31 is simply increased without lowering the operation load ratio of the gas turbine, the value of the generated electric power amount may be increased because the generated electric power amount of the steam turbine 11 increases. Therefore, there is not any shortage of the generated electric power amount, but the total fuel consumption of the combined cycle increases because the amount of the duct combustor fuel 25 increases. Therefore, the gas turbine operation load ratio is to be lowered. However, it is to be noted that the number of the operating gas turbines 1 cannot be changed in a short time.

An object of the present invention is to provide an electric power-generating and desalination combined plant capable of improving a combined-cycle generating efficiency, and reducing a total annual fuel consumption in a case where the electric power-generating and desalination combined plant carries out a partial load operation in accordance with an electricity demand or a freshwater demand which fluctuates with season, and to provide a method of operating the plant.

To achieve the above-described object, in the present invention, an electric power-generating and desalination combined plant is provided and which is operated by the following method and means.

In a first aspect of the present invention, an operation load ratio of a gas turbine is set in a range at which a flow rate per unit time of surplus steam that is not used in a desalination facility among turbine exhaust steam of a steam turbine, that is, a surplus steam amount is in a range of zero to a predetermined allowable value, when the plant is operated.

In a second aspect of the present invention, in a case where a plurality of gas turbines are installed, and the number of operating gas turbines is adjustable, the number of the operating gas turbines is set to a minimum number capable of realizing a desired generated electric power amount, and an operation load ratio of at least one gas turbine is set to an operation load ratio at which a flow rate per unit time of surplus steam that is not used in a desalination facility among exhaust steam of a steam turbine, that is, a surplus steam amount is in a range of zero to a predetermined allowable value.

In a third aspect of the present invention, the number of the operating gas turbines is set to a minimum number which is capable of realizing a desired generated electric power amount while outlet temperatures of corresponding duct combustors disposed in exhaust gas boilers are not more than allowable temperatures, when the plant comprises a plurality of gas turbines.

In a fourth aspect of the present invention, an operation of a combined plant is switched from a rated operation to a predetermined operation in which steam extracted from the exhaust gas boiler associated with a gas turbine is mixed with turbine exhaust steam of the steam turbine for utilizing as a heat source of a desalination facility, so as to set an operation load ratio of the gas turbine to a value capable of realizing the desired generated electric power amount.

According to the present invention, when the electric power-generating and desalination combined plant is operated by the above-described one of methods and means, it is possible to maximize an electric power generating efficiency during a partial load operation while simultaneously satisfying a required amount of heat-source steam for the desalination facility and a required generated electric power amount. Therefore, in a case where the partial load operation is carried out in accordance with a demand for electricity or freshwater which fluctuates with season, a combined-cycle generating efficiency can be improved, and a total annual fuel consumption can be reduced.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a constitution diagram showing a first embodiment of an electric power-generating and desalination combined plant and a method of operating the plant according to the present invention;
FIG. 2 is a block diagram showing a control in the first embodiment shown in FIG. 1;
FIG. 3 are characteristic curves showing relations among a combined-cycle generating efficiency and a surplus steam amount with respect to an operation load ratio of a gas turbine in the first embodiment;
FIG. 4 is a constitution diagram of an electric power-generating and desalination combined plant in which three gas turbines are installed according to the first embodiment;
FIG. 5 is a constitution diagram of an electric power-generating and desalination combined plant in which a duct combustor is disposed within a heat exchanger portion in the first embodiment;
FIG. 6 is a constitution diagram of an electric power-generating and desalination combined plant in which a plurality of duct combustors are arranged in a flow path of a combustion exhaust gas in an exhaust gas boiler in the first embodiment;
FIG. 7 are characteristic curves showing relations between a combined-cycle generating efficiency and a surplus steam amount with respect to an operation load ratio of a gas turbine in a case where larger number of gas turbines are operated and a case where less number of gas turbines are operated in a second embodiment of the present invention;
FIG. 8 is a constitution diagram of an electric power-generating and desalination combined plant and a method of operating the plant according to a third embodiment of the present invention;
FIG. 9 are characteristic curves showing relations between an outlet temperature of a duct combustor with respect to a gas-turbine operation load ratio in addition to those shown in FIG. 3 according to the third embodiment;
FIG. 10 shows a block diagram of a control system of a plant according to a fourth embodiment of the present invention;
FIG. 11 shows a block diagram of a control system in a fifth embodiment of the present invention;
FIG. 12 is a constitution diagram of a sixth embodiment of an electric power-generating and desalination combined plant and a method of operating the plant according to the present invention;
FIG. 13 is a constitution diagram of an electric power-generating and desalination combined plant provided with two duct combustors in the embodiment shown in FIG. 12;
FIG. 14 is a constitution diagram of an electric power-generating and desalination combined plant and a method of operating the plant according to a seventh embodiment of the present invention;
FIG. 15 is a constitution diagram of an electric power-generating and desalination combined plant and a method of operating the plant according to an eighth embodiment of the present invention;
FIG. 16 are characteristic curves including a curve denoted by dot lines indicating a relation between a combined-cycle generating efficiency and extracted steam for a desalination-facility heat source in addition to those shown in FIG. 9;
FIG. 17 is a block diagram showing a control system of a plant according to a ninth embodiment of the present invention; and
FIG. 18 shows a constitution diagram of a conventional electric power-generating and desalination combined plant and a method of operating the plant.

Embodiments of the present invention will be described hereinafter with reference to the accompanying drawings.

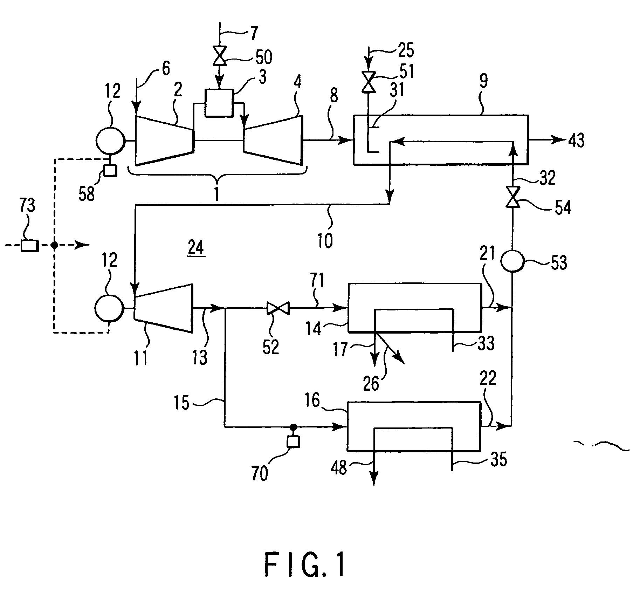

FIG. 1 is a constitution diagram of an electric power-generating and desalination combined plant 24 and a method of operating the plant according to a first embodiment of the present invention. In FIG. 1, the same components as those of FIG. 18 are denoted with the same reference numerals for the sake of simplicity, and different respects will be described in detail herein.

As shown in FIG. 1, an electric power generator 12 connected to a gas turbine 1 is provided with an electric power meter 58 for the gas turbine electric power generator 1. There is disposed a flow meter 70 which measures an amount of surplus steam 15 of turbine exhaust steam 13 flowing from a steam turbine 11 into a damp condenser 16.

Furthermore, there is disposed an electric power-line-end power meter 73 which measures an electric power-line-end power value obtained by subtracting an electric power consumed by an operation of devices including a pump 53 in the electric power-generating and desalination combined plant from electric powers generated by an electric power generator 12 connected to the steam turbine 11 and the electric power generator 12 connected to the gas turbine 1.

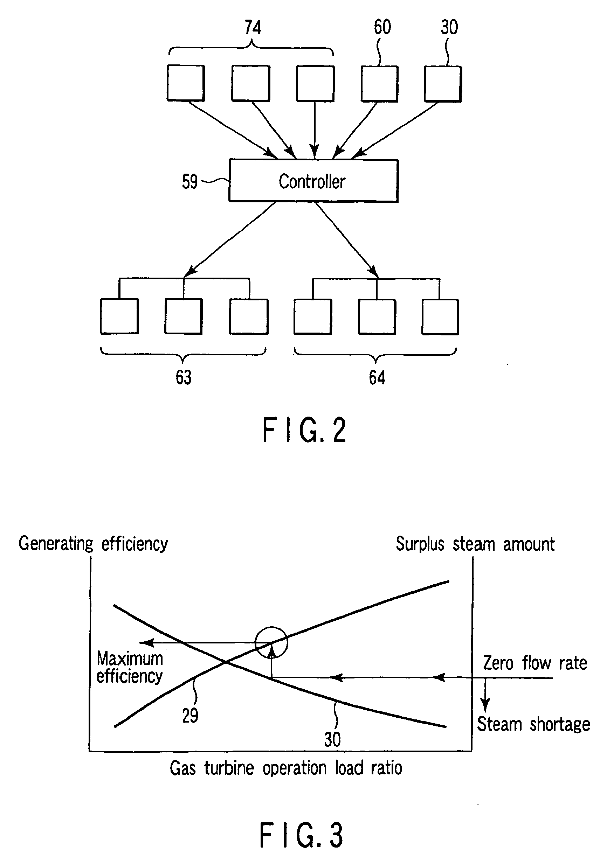

As shown in FIG. 2, into a controller 59, there are input gas-turbine electric power-generator electric power values 74 measured by the gas-turbine electric power-generator electric power meters including the meter 58 of FIG. 1, an electric power-line-end electric power value 60 measured by the power meter 73, and a surplus steam amount 30 measured by the flow meter 70, respectively.

The controller 59 controls open degrees 63 of gas-turbine fuel flow rate adjustment valves including the valve 50 of FIG. 1 and open degrees 64 of duct-combustor fuel flow rate adjustment valves including the valve 51 of FIG. 1 based on characteristics of a gas-turbine operation load ratio obtained beforehand as shown in FIG. 3.

It is shown in FIG. 2 that three gas turbines are disposed in the control system of the combined plant. In the embodiment of FIG. 1, only one gas turbine 1 is disposed. The controller 59 controls the gas-turbine electric power-generator electric power value 74, the open degree 63 of the gas-turbine fuel flow rate adjustment valve 50, and the open degree 64 of the duct-combustor fuel flow rate adjustment valve 51.

FIG. 3 shows characteristic curves showing a combined-cycle generating efficiency 29 and a surplus steam amount 30 with respect to an operation load ratio of the gas turbine 1 in a case where a combined-cycle generated electric power amount, that is, a total value of generated electric power amounts of the gas turbine 1 and the steam turbine 11 agrees with a desired generated electric power amount, and the number of operating gas turbines (one turbine 1 in the embodiment of FIG. 1) is fixed.

During a partial load operation, the desired generated electric power amount can be obtained even when the operation load ratio of the gas turbine 1 is lower than 100%.

The higher gas-turbine operation load ratio results in a larger ratio of the total value of the generated electric power amount of the gas turbine 1 and the amount of the electric power generated by the steam turbine 11 by use of exhaust heat of the gas turbine 1 with respect to the combined-cycle generated electric power amount obtained by adding, to the total value, the generated electric power amount of the steam turbine 11 by combustion support of a duct combustor 31. Therefore, the generating efficiency 29 rises.

Moreover, when the generated electric power amount of the gas turbine 1 is small, the combustion support of an exhaust gas boiler 9 increases, and the generated electric power amount of the steam turbine 11 increases. Therefore, a generated steam amount increases. Consequently, the higher the gas-turbine operation load ratio is, the smaller the amount of the turbine exhaust steam 13 is. When the operation load ratio is sufficient low, the amount of the turbine exhaust steam becomes larger than a required steam amount of a desalination facility 14. Therefore, the surplus steam amount 30 increases.

Therefore, a graph of the surplus steam amount 30 with respect to the operation load ratio descends rightwards.

Conversely, when the gas-turbine operation load ratio is raised, the generating efficiency 29 increases, but the surplus steam amount 30 decreases. The required steam amount of the desalination facility 14 cannot be secured at a certain operation load ratio. In a case where the steam is lacking with respect to the desalination facility 14, the operation thereof is not established. Therefore, when the surplus steam amount 30 turns to zero, the generating efficiency 29 is maximized.

A state value of a generated electric power output of the gas turbine 1 or a combustion exhaust gas 8 changes with temperature, humidity, and pressure of atmospheric air, but the characteristics shown in FIG. 3 do not qualitatively change. In a short time, there is also a small fluctuation of the demand for electricity. The value may be set to be slightly larger than zero in consideration of a case where there is a large demand for electricity. This value is a predetermined allowable value determined by an operator of the electric power-generating and desalination combined plant.

Therefore, in a case where the electric power-generating and desalination combined plant 24 is operated at a gas-turbine operation load ratio at which the surplus steam amount 30 is in a range of zero to the predetermined allowable value, the operation with a maximum generating efficiency 29 can be realized during the partial load operation.

Next, there will be described a function of the plant for realizing such operation.

First, the open degree of a steam flow rate adjustment valve 52 for the desalination-facility heat source is separately controlled by adjusting an amount of manufactured freshwater. That is, to increase the manufactured freshwater amount, the open degree of the steam flow rate adjustment valve 52 is increased. To decrease the amount, the open degree is further reduced.

While such control is carried out, the controller 59 controls the open degree 63 of the gas-turbine fuel flow rate adjustment valve 50 to obtain the gas-turbine operation load ratio at which the surplus steam amount 30 is in a range of zero to the predetermined allowable value, and the flow rate of a gas turbine fuel 7 is adjusted.

The gas-turbine operation load ratio is obtained beforehand from the characteristics shown in FIG. 3, and a gas turbine combustion of the gas turbine 1 is adjusted so that an electric power value of the gas-turbine power generator 12 with respect to the gas turbine 1 indicates a value obtained by multiplying a rated generated electric power value by the operation load ratio. Additionally, to obtain a desired generated electric power amount as the electric power-line-end power value, the open degree 64 of the fuel flow rate adjustment valve 51 of the duct combustor 31 is controlled, the flow rate of a fuel 25 of the duct combustor 31 is adjusted, and the combustion support of the duct combustor 31 is adjusted.

When there is a slight increase of a demand for freshwater for a short time, the open degree of the steam flow rate adjustment valve 52 for the heat source is increased, and the surplus steam amount 30 indicating the predetermined allowable value at maximum is decreased. Therefore, it is possible to increase the flow rate of the steam for the heat source. Even an internal fluctuation of the electric power-generating and desalination combined plant itself can be similarly handled.

As described above, the open degree of the steam flow rate adjustment valve 52 for the desalination-facility heat source is controlled based on the manufactured freshwater amount. Further, values of a flow rate, a temperature, and a pressure of steam 71 for a desalination-facility heat source may be measured to calculate an enthalpy value of the steam 71 for the heat source. The measured values are controlled so that the calculated enthalpy becomes equal to that required for desalination water to satisfy the demand for freshwater.

Moreover, it may be assumed that the value of the pressure of the steam 71 for the desalination-facility heat source does not largely change. In this condition, a quantity of heat of the steam 71 for the desalination-facility heat source may be calculated from the flow rate value and the temperature value only. In this case, it may be assumed that the quantity of heat is equal to that required for desalination water to satisfy the demand for freshwater, by controlling the open degree of the steam flow rate adjustment valve 52 for the desalination-facility heat source.

In the first embodiment, while the electric power value 74 generated from the electric power generator 12 of the gas turbine 1 is measured with the electric power meter 58, and monitored, the flow rate of the gas turbine fuel 7 is adjusted. However, the flow rate of the gas turbine fuel 7 corresponding to a target value of the operation load ratio may be calculated, and the open degree 63 of the gas-turbine fuel flow rate adjustment valve 50 may be controlled based on the characteristics of the gas turbine 1.

Moreover, as described above, while the electric power-line-end power value is monitored, the flow rate of the duct combustor fuel 25 is adjusted in accordance with the desired generated electric power amount. Further, the flow rate of the duct combustor fuel 25 corresponding to the desired generated electric power amount may be calculated, and the open degree 64 of the duct-combustor fuel flow rate adjustment valve 51 may be controlled, based on the characteristics of the combined plant.

Furthermore, the combustions of the gas turbine 1 and the duct combustor 31 do not have to be controlled by the flow rates of the gas turbine fuel 7 and the duct combustor fuel 25. Another method such as adjustment of the flow rate of combustion air 6 may be used for the combustions.

FIG. 1 shows a case where the single gas turbine 1, the single steam turbine 11, and the single desalination facility 14 are disposed, but any number of these constituting devices may be utilized.

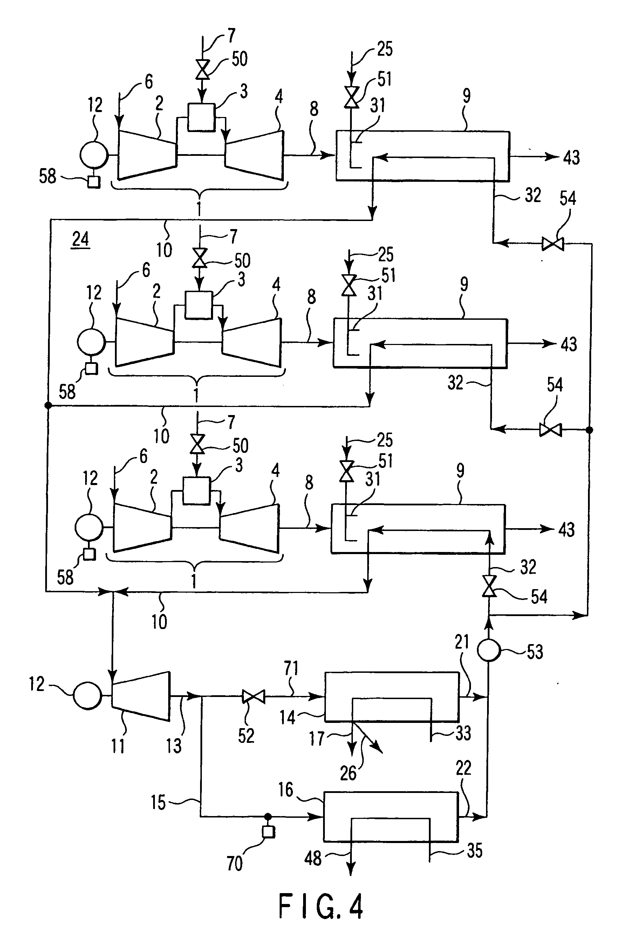

For example, an operation similar to the above-described operation can be performed even in an electric power-generating and desalination combined plant 24 which is provided with three gas turbines 1 as shown in FIG. 4.

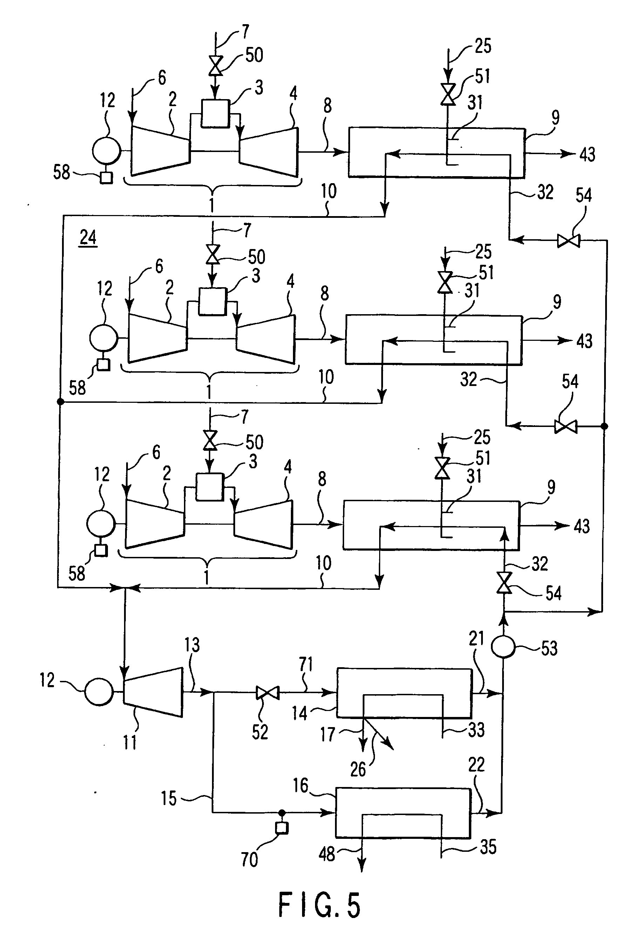

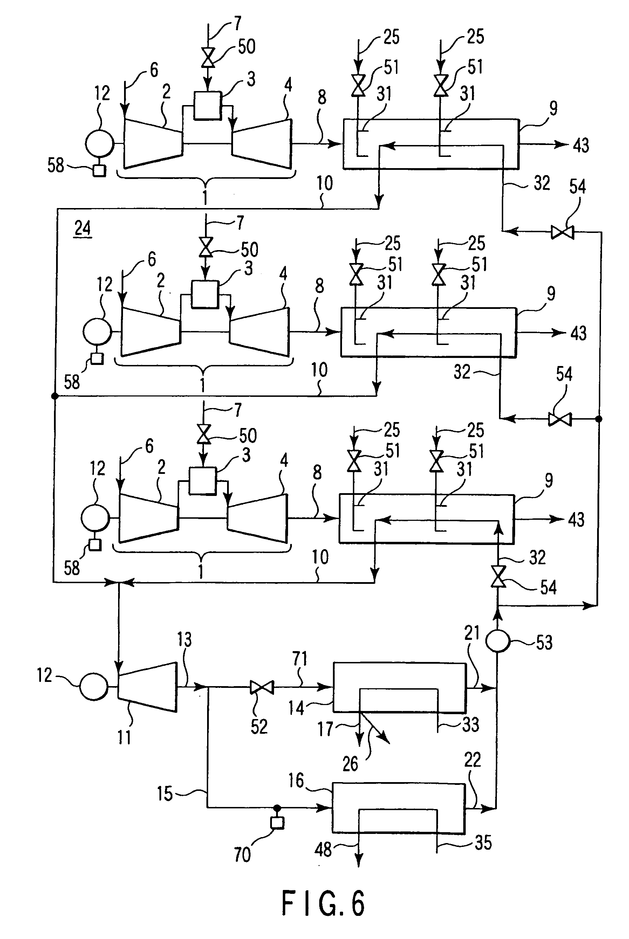

Moreover, in FIGS. 1 and 4, the duct combustor 31 is disposed on an upstream side of a flow direction of the combustion exhaust gas 8 with respect to a heat exchanger of the exhaust gas boiler 9, but the duct combustor 31 may be disposed within a heat exchanger section as shown in FIG. 5. Furthermore, in FIGS. 1, 4, and 5, only one duct combustor 31 is disposed in the flow direction of the respective combustion exhaust gas 8 of the exhaust gas boiler 9, but as shown in FIG. 6, a plurality of duct combustors 31 may be arranged serially in the flow direction of the combustion exhaust gas 8. Here, two duct combustors may be disposed on the upstream side of a high-pressure super heater of the exhaust gas boiler 9 and on the upstream side of an evaporator.

Furthermore, even when a plurality of duct combustors 31 are arranged in the flow path of the combustion exhaust gas 8 as described above, all of the combustors do not have to be operated. For example, in FIG. 6, only one duct combustor 31 on a downstream side may be operated to facilitate a temperature control of the turbine exhaust steam 13 discharged from the steam turbine 11.

In the first embodiment, as described above, to operate the electric power-generating and desalination combined plant, the operation load ratio of the gas turbine 1 is set to a value at which a flow rate per unit time of the surplus steam 15 that is not used in the desalination facility 14 among the turbine exhaust steam 13 of the steam turbine 11, that is, the surplus steam amount 30 is in a range of zero to the predetermined allowable value. Accordingly, a generating efficiency during the partial load operation can be improved, and a total annual fuel consumption can be reduced. Even in a case where a plurality of gas turbines 1 are arranged, and the number of the operating gas turbines is adjustable, functions and effects similar to those described above can be obtained.

Additionally, in the first embodiment, the control is executed by the controller 59 shown in FIG. 2, but the present invention may be applicable as long as the operation load ratio is appropriate even in a case where the controller 59 is not used. That is, to operate the plant, for example, an operation parameter may be determined beforehand depending on a period such as season or time zone, and the open degree of the steam flow rate adjustment valve 52 for the desalination-facility heat source may be determined. Instead of automatic control or the like, the control by an operator may be executed.

A second embodiment of the present invention will be described with reference to FIGS. 4 to 7.

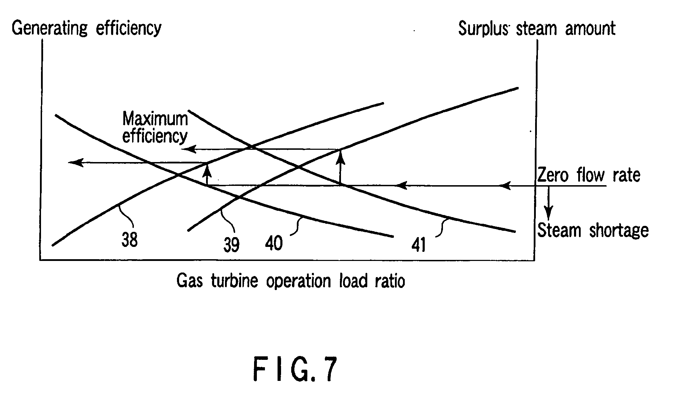

Since the constitutions of the combined plant according to the second embodiment are the same as the first embodiment the constitutions of which have been shown in FIGS. 4 to 6, the description of constitutions of the second embodiment similar to those described in the first embodiment is omitted here, and a characteristic diagram shown in FIG. 7 will be mainly described herein.

In a case where a combined-cycle generated electric power amount agrees with a desired generated electric power amount, the higher a ratio of a gas-turbine generated electric power amount is which occupies the combined-cycle generated electric power amount, the higher a generating efficiency becomes. This is because a total value of the gas-turbine generated electric power amount and a steam-turbine generated electric power amount by gas-turbine exhaust heat is large, and a combustion support fuel 25 of an exhaust gas boiler 9 becomes small.

A gas turbine fuel 7 is utilized in electric power generation of the gas turbine 1, electric power generation of a steam turbine 11, and a desalination facility 14. The fuel 25 of the duct combustor 31 can be utilized in the electric power generation of the steam turbine 11 and the desalination facility 14 only. Therefore, when more fuel is consumed in the gas turbine 1, the generating efficiency becomes higher.

In a case where the gas-turbine generated electric power amount is equal, the smaller the number of operating gas turbines is, the higher a gas-turbine operation load ratio becomes, but a combined-cycle generating efficiency becomes higher. This is because the gas turbine 1 has characteristics that the higher the operation load ratio is, the higher a turbine internal efficiency becomes. A system thermal efficiency of the gas turbine 1 also becomes high, and therefore the gas turbine fuel 7 decreases.

FIG. 7 shows characteristic curves denoting a relation between the gas-turbine operation load ratio and the generation efficiency 29 and a relation between the gas-turbine operation load ratio and the surplus steam amount 30 in FIG. 3 in a case where the number of the operating gas turbines is large and a case where the number is small, respectively.

In FIG. 7, the generating efficiencies at times when the number of the operating gas turbines is large and small are denoted as curves 38, 39, and surplus steam amounts are denoted as curves 40, 41, respectively. In comparison of the generating efficiencies 38, 39 at gas-turbine operation load ratios corresponding to a time when the surplus steam amounts 40, 41 turn to zero, the generating efficiency 39 at a time when the number of the gas turbines is smaller is higher.

However, in a case where the number of the operating gas turbines is excessively reduced, even when the operation load ratio is set to 100%, a total combined-cycle generated electric power amount or freshwater amount is less than a desired amount. The necessary and sufficient number of the gas turbines is the minimum number of the gas turbines capable of realizing the desired generated electric power amount, and the number of the gas turbines differs with situations.

Therefore, the number of the operating gas turbines 1 is set to the minimum number of the turbines capable of realizing a desired generated electric power amount. Additionally, the electric power-generating and desalination combined plant is operated at a gas-turbine operation load ratio at which the surplus steam amount is zero or a value slightly larger than zero. Accordingly, it is possible to realize an operation with a maximum generating efficiency during a partial load operation.

Consequently, in the second embodiment, among three gas turbines 1 shown in FIGS. 4 to 6, the minimum number of the gas turbines capable of realizing the desired generated electric power amount should be operated. Additionally, the operation load ratio of each gas turbine 1 is set to a value at which a flow rate per unit time of surplus steam 15 that is not used in a desalination facility 14 among exhaust steam 13 of the steam turbine 11, that is, a surplus steam amount is in a range of zero to a predetermined allowable value, when the electric power-generating and desalination combined plant 24 is operated. In this case, a water supply valve 54 associated with the exhaust gas boiler 9 for a combustion exhaust gas 8 of the inoperative gas turbine 1 should be closed.

FIGS. 4 to 6 show a case where three gas turbines 1, one steam turbine 11, and one desalination facility 14 are disposed, but any number of these constituting devices may be disposed.

As described above, in the electric power-generating and desalination combined plant 24 of the second embodiment, the number of the operating gas turbines 1 is set to the minimum number of the turbines capable of realizing the desired generated electric power amount. Additionally, the plant is operated at the gas-turbine operation load ratio at which the surplus steam amount is zero or the value slightly larger than zero. Accordingly, the generating efficiency during the partial load operation can be improved, and a total annual fuel consumption can be reduced.

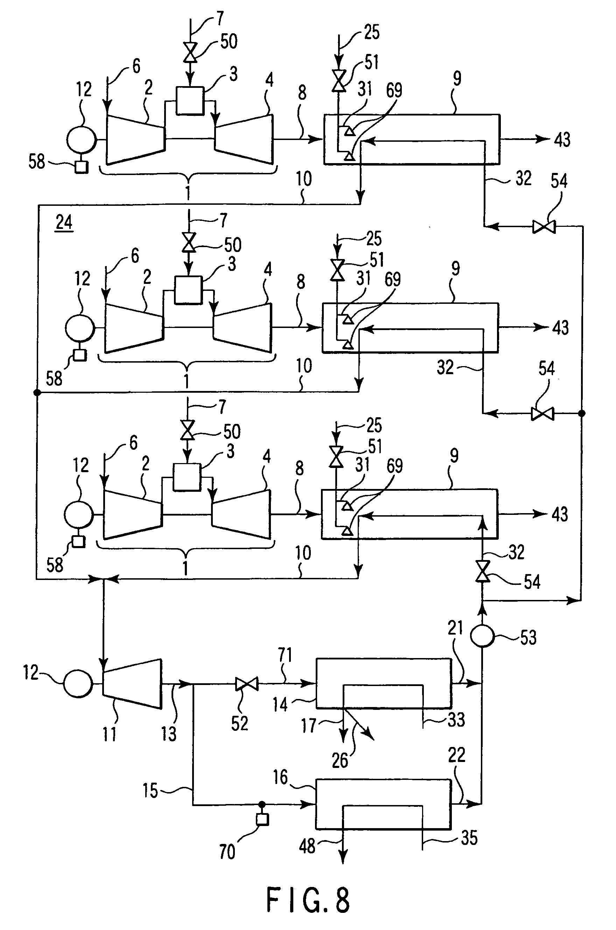

A third embodiment of the present invention will be described with reference to FIG. 8.

FIG. 8 is a constitution diagram of an electric power-generating and desalination combined plant according to the third embodiment. The same components as those of FIG. 4 are denoted with the same reference numerals, description thereof is omitted, and different respects will be described in detail herein.

In the third embodiment, as shown in FIG. 8, a temperature gauge 69 is disposed in an outlet of a duct combustor 31, and the electric power-generating and desalination combined plant is operated based on an outlet temperature of the duct combustor 31 measured by this temperature gauge 69, at each exhaust gas boiler 9. In this case, the number of operating gas turbines 1 is set to a minimum number of the turbines with which a desired electric power amount can be generated and with which the outlet temperatures of all of the duct combustors 31 disposed in exhaust gas boilers 9 are not more than allowable temperatures.

It is to be noted that the outlet temperature of each duct combustor 31 may be set by use of a characteristic value obtained beforehand instead of the temperature gauge 69.

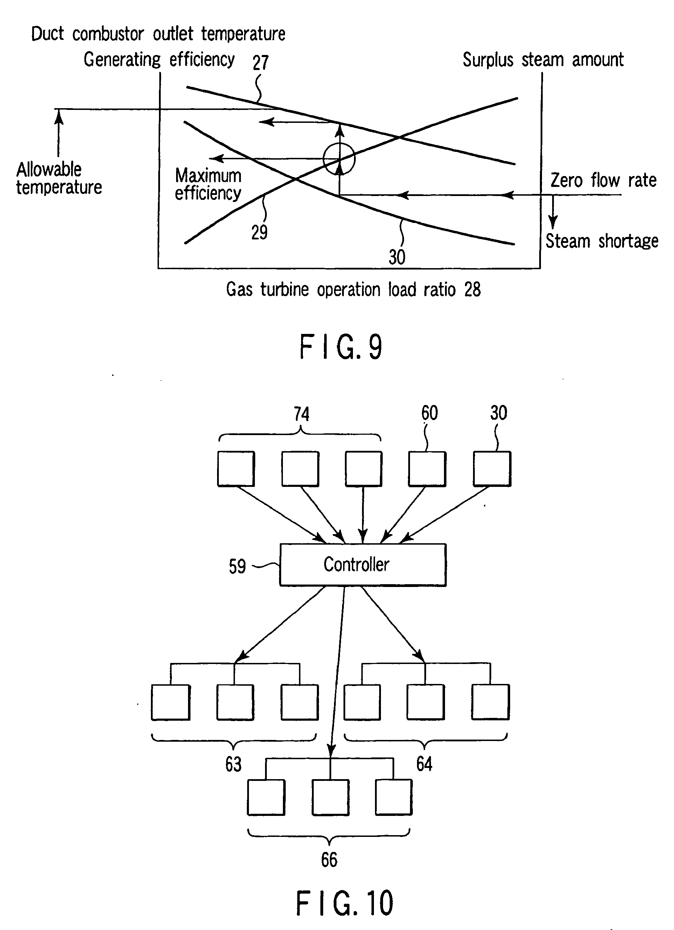

FIG. 9 are characteristic curves including a curve denoting an outlet temperature 27 of the duct combustor 31 with respect to a gas-turbine operation load ratio in addition to the curves shown in FIG. 3.

In FIG. 9, when the gas-turbine operation load ratio 28 increases, a load on a steam turbine 11 decreases. Therefore, the fuel amount for the combustion support at the exhaust gas boiler 9 decreases, and the duct-combustor outlet temperature 27 drops.

Additionally, an installation place of the duct combustor 31 disposed in the exhaust gas boiler 9 is not limited to a place in a flow path of a combustion exhaust gas 8, and the duct combustors may be disposed in two or more places as shown in FIG. 6. In FIG. 9, the outlet temperature 27 of the duct combustor 31 corresponds to a case where the duct combustor 31 is disposed in the place in the flow path of the combustion exhaust gas 8. However, in a case where the duct combustors 31 are provided and operated at two places in the flow path of the combustion exhaust gas 8, when the outlet temperature 27 of one of the duct combustors 31 is fixed, the other outlet temperature 27 of the duct combustor 31 indicates a rightward descending curve in the same manner as in the outlet temperature 27 of the duct combustor 31 during the operation in a case where only one duct combustor 31 is provided.

Additionally, when the outlet temperature 27 of the duct combustor 31 reaches at a value not less than the allowable temperature, a combined-cycle operation is not established. If the outlet temperature 27 of the duct combustor 31 is not less than the allowable temperature at the gas-turbine operation load ratio at which the surplus steam amount 30 is zero, there is not any gas-turbine operation load ratio that simultaneously satisfies both of the steam for the desalination facility 14 and the outlet temperature 27 of the duct combustor 31. Therefore, operations of the operating gas turbines at this time or the less number of the operating gas turbines are not established.

To solve the problem, the number of the operating gas turbines 1 is set to the minimum number of the turbines with which the outlet temperatures 27 of all of the duct combustors 31 disposed in the exhaust gas boilers 9 are not more than the allowable temperatures, when the plant is operated.

In a case where the electric power-generating and desalination combined plant is operated in this manner, when the generating efficiency during the partial load operation is improved while keeping restrictions on materials for use in the exhaust gas boiler 9 and the duct combustor 31, the total annual fuel consumption can be reduced.

A fourth embodiment of the present invention will be described with reference to FIG. 10.

Here, the description of the fourth embodiment will be made in accordance with any of the electric power-generating and desalination combined plants shown in FIGS. 4 to 6.

In the electric power-generating and desalination combined plant shown in any of FIGS. 4 to 6 in the fourth embodiment, electric power generators 12 connected to all gas turbines 1 are provided with electric power meters 58 for gas-turbine electric power generators. There is disposed a flow meter 70 which measures a surplus steam amount of turbine exhaust steam 13 flowing from a steam turbine 11 into a damp condenser 16.

Furthermore, there is disposed an electric power-line-end power meter (not shown) which measures an electric power-line-end power value obtained by subtracting an electric power consumed by a device such as a pump 53 in the electric power-generating and desalination combined plant from electric powers generated by an electric power generator 12 connected to the steam turbine 11 and the electric power generators 12 connected to all the gas turbines 1.

As shown in FIG. 10, into a controller 59, there are input gas-turbine electric power-generator power values 74, an electric power-line-end power value 60, and a surplus steam amount 30 which are measured by the gas-turbine electric power-generator power meters 58, the flow meter 70, and the electric power-line-end electric power meter, respectively.

This controller 59 issues start/stop signals 66 to the gas turbines 1, and controls, through actuators provided in the controller 59, open degrees 63 of gas-turbine fuel flow rate adjustment valves 50 and open degrees 64 of duct-combustor fuel flow rate adjustment valves 51 based on characteristics of a gas-turbine operation load ratio obtained beforehand from FIG. 3.

Next, there will be described an operation of the electric power-generating and desalination combined plant by this controller 59.

An open degree of a steam flow rate adjustment valve 52 for a desalination-facility heat source is separately controlled to adjust an amount of freshwater to be manufactured. To increase the amount of the manufactured freshwater, the open degree is further increased. To decrease the amount, the open degree is further reduced.

While carrying out this control, the controller 59 issues a start/stop signal 66 to each gas turbine 1 so that the number of the operating gas turbines 1 is set to the minimum number of the turbines capable of realizing a desired generated electric power amount. Accordingly, the minimum number of the gas turbines 1 only are operated, the other gas turbines are stopped, and there are closed only water supply valves 54 to exhaust gas boilers 9 associated with the inoperative gas turbines 1.

Moreover, the controller 59 controls the open degrees 63 of all of the gas-turbine fuel flow rate adjustment valves 50 to obtain the gas-turbine operation load ratio at which the surplus steam amount 30 is in a range of zero to the predetermined allowable value. Accordingly, combustions of all of the gas turbines 1 are adjusted.

The gas-turbine operation load ratio is obtained beforehand from the characteristics shown in FIG. 3, and the gas turbine combustion of each gas turbine 1 is adjusted so that an electric power value of a gas-turbine electric power generator with respect to each gas turbine 1 indicates a value obtained by multiplying a rated generated electric power value by the operation load ratio. Additionally, to obtain a desired generated electric power amount as the electric power-line-end electric power value 60, the open degree 64 of the duct-combustor fuel flow rate adjustment valve 51 is controlled, and combustion support of each duct combustor 31 is adjusted.

Supposing that there is a slight increase of a demand for freshwater for a short time, when the open degree of the steam flow rate adjustment valve 52 for the heat source is increased, the surplus steam amount 30 of the predetermined allowable value decreases, and the flow rate of steam 71 for the heat source can be increased. Even an internal fluctuation of the electric power-generating and desalination combined plant itself can be similarly handled.

The open degree of the steam flow rate adjustment valve 52 for the desalination-facility heat source does not have to be controlled based on the manufactured freshwater amount as described above. Thus, values of a flow rate, a temperature, and a pressure of the steam 71 for the desalination-facility heat source may be measured to calculate enthalpy of the steam 71 for the heat source. In this case, the open degree may be controlled so that the calculated enthalpy becomes equal to an enthalpy value with which the required amount of the desalination water to satisfy the demand for freshwater can be obtained.

Moreover, it may be assumed that the value of the pressure of the steam 71 for the desalination-facility heat source does not largely change. In this case, a quantity of heat of the steam 71 for the desalination-facility heat source is calculated from the flow rate value and the temperature value only. In this case, the open degree may be controlled so that the quantity of heat is equal to that required for desalination water to satisfy the demand for freshwater.

Furthermore, the open degree of the steam flow rate adjustment valve 52 for the desalination-facility heat source may be predetermined depending on a period such as season or time zone before the plant is operated.

As described above, the flow rate of the gas turbine fuel 7 is adjusted while the electric power value of each gas-turbine electric power generator 12 is monitored. However, the flow rate of the gas turbine fuel 7 corresponding to a target value of the operation load ratio may be calculated, and the open degree of each gas-turbine fuel flow rate adjustment valve 50 may be controlled.

Furthermore, as described above, the flow rate of the duct combustor fuel 25 is adjusted to match the desired generated electric power amount while the electric power-line-end electric power value is monitored, but the flow rate of the duct combustor fuel 25 corresponding to the desired generated electric power amount may be calculated based on the characteristics of the electric power-generating and desalination combined plant to control the open degree 64 of the duct-combustor fuel flow rate adjustment valve 51.

Furthermore, the combustions of the gas turbine 1 and the duct combustor 31 do not have to be controlled based on the flow rates of the gas turbine fuel 7 and the duct combustor fuel 25, and another method such as flow rate adjustment of combustion air 6 may be used.

FIGS. 4 to 6 show a case where three gas turbines 1, the single steam turbine 11, and the single desalination facility 14 are arranged, but any number of these constituting devices may be arranged.

Additionally, the outlet temperatures of all of the duct combustors 31 need to be set to the allowable temperatures or less from restrictions on heat resistances of materials for use in the exhaust gas boiler 9 and the duct combustor 31. In this case, the following control is executed.

First, the open degree of the steam flow rate adjustment valve 52 for the desalination-facility heat source is separately controlled to adjust the amount of freshwater to be manufactured. To increase the manufactured freshwater amount, the open degree of the steam flow rate adjustment valve 52 for the desalination-facility heat source is further increased. To decrease the amount, the open degree is further reduced.

While this control is carried out, the controller 59 issues the start/stop signals to the gas turbine 1 and the pump 53 so that the operating gas turbines 1 is set to the minimum number of the gas turbines with which a desired generated electric power amount can be realized and with which the outlet temperatures of all the duct combustors disposed in the exhaust gas boilers 9 are not more than the allowable temperatures. At this time, the duct-combustor outlet temperatures are obtained beforehand from the characteristics shown in FIG. 9.

Moreover, the controller 59 controls the open degrees of all the gas-turbine fuel flow rate adjustment valves 50 to obtain the gas-turbine operation load ratio at which the surplus steam amount 30 is in a range of zero to the predetermined allowable value, and the combustions of all the gas turbines 1 are adjusted.

The gas-turbine operation load ratio is obtained beforehand from the characteristics shown in FIG. 3, and the gas turbine combustion of each gas turbine 1 is adjusted so that an electric power value of each gas-turbine electric power generator 12 with respect to each gas turbine 1 indicates a value obtained by multiplying a rated generated electric power value by the operation load ratio. Additionally, to obtain a desired generated electric power amount as the electric power-line-end electric power value, the open degree of the duct-combustor fuel flow rate adjustment valve 51 is controlled, and combustion support of each duct combustor 31 is adjusted.

Supposing that when there is a slight increase of a demand for freshwater for a short time, the open degree of the steam flow rate adjustment valve 52 for the heat source is increased, the surplus steam amount 30 indicating the predetermined allowable value decreases, and the flow rate of the steam 71 for the heat source can be increased. Even an internal fluctuation of the electric power-generating and desalination combined plant itself can be similarly handled.

In a case where the electric power-generating and desalination combined plant is operated in this manner, when the power generating efficiency during the partial load operation is improved while keeping restrictions on materials for use in the exhaust gas boiler 9 and the duct combustor 31, the total annual fuel consumption can be reduced. According to the present embodiment, it is possible to realize an automation control for the operation of the combined plant which eliminates a possibility of erroneous operation, and reliability is improved.

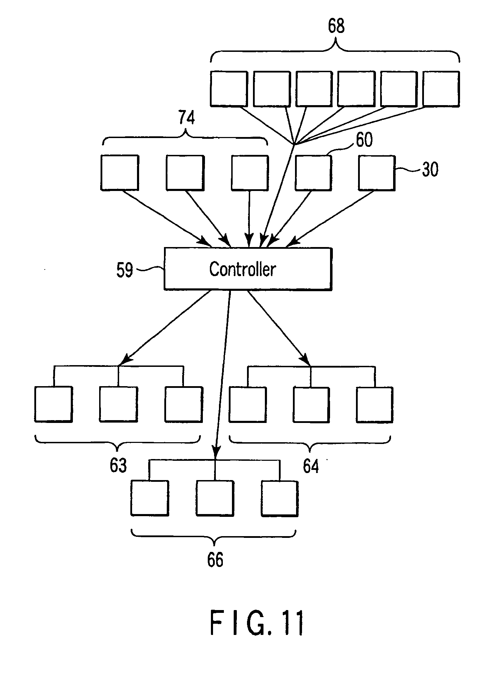

A fifth embodiment of the present invention will be described with reference to FIG. 11.

Here, the constitution of this embodiment is similar to those described in accordance with any of electric power-generating and desalination combined plants shown in FIGS. 4 to 6.

In the electric power-generating and desalination combined plant shown in any of FIGS. 4 to 6 in the fifth embodiment, electric power generators 12 connected to all gas turbines 1 are provided with electric power meters 58 for gas-turbine electric power generators. There is disposed a flow meter 70 which measures a surplus steam amount of turbine exhaust steam 13 flowing from a steam turbine 11 into a damp condenser 16. Furthermore, outlets of all of duct combustors 31 are provided with temperature gauges 69.

Furthermore, there is disposed an electric power-line-end electric power meter (not shown) which measures an electric power-line-end electric power value obtained by subtracting an electric power consumed by a device such as a pump 53 in the electric power-generating and desalination combined plant from electric powers generated by an electric power generator 12 connected to the steam turbine 11 and the electric power generators 12 connected to all the gas turbines 1. Into a controller 59 of FIG. 11, there are input all of measured electric power values of the gas-turbine electric power generators 12, an electric power-line-end electric power value, a surplus steam amount 30, and outlet temperature values 68 of all of the duct combustors 31.

This controller 59 issues start/stop signals to the gas turbines 1, and controls open degrees 63 of gas-turbine fuel flow rate adjustment valves 50 and open degrees 64 of duct-combustor fuel flow rate adjustment valves 51 based on characteristics of a gas-turbine operation load ratio obtained beforehand from FIG. 9.

Next, there will be described an operation of the electric power-generating and desalination combined plant by this controller 59.

An open degree of a steam flow rate adjustment valve 52 for a desalination-facility heat source is separately controlled to adjust an amount of freshwater to be manufactured. To increase the amount of the manufactured freshwater, the open degree is further increased. To decrease the amount, the open degree is further reduced.

While carrying out this control, the controller 59 issues a start/stop signal to each gas turbine 1 so that the number of the operating gas turbines 1 is set to the minimum number of the turbines with which a desired generated electric power amount can be realized and with which the outlet temperatures of all of the duct combustors 31 disposed in exhaust gas boilers 9 are not more than allowable temperatures. At this time, the outlet temperature 68 of each duct combustor 31 is controlled using a value obtained beforehand from the characteristics shown in FIG. 9. However, when characteristics of the gas turbine 1 have aged deteriorations, and the temperature, humidity, and pressure of atmospheric air change, a difference becomes large between the preset outlet temperature value and an actually measured outlet temperature value of the duct combustor 31.

Therefore, in a case where the outlet temperature of the duct combustor 31 is not less than the allowable temperature, the controller 59 issues the start/stop signal to the gas turbine 1 so that the number of the operating gas turbines 1 is set to the minimum number of the turbines with which the desired generated electric power amount can be realized and with which the actually measured outlet temperatures of all of the duct combustors 31 are not more than the allowable temperatures.

Accordingly, the minimum number of the gas turbines 1 only are operated, the other gas turbines are stopped, and there are closed only water supply valves 54 to the exhaust gas boilers 9 of the inoperative gas turbines 1.

Moreover, the controller 59 controls the open degrees of all of the gas-turbine fuel flow rate adjustment valves 50 to obtain the gas-turbine operation load ratio at which the surplus steam amount 30 is in a range of zero to the predetermined allowable value. Accordingly, combustions of all of the gas turbines 1 are adjusted.

The gas-turbine operation load ratio is obtained beforehand from the characteristics shown in FIG. 3, and the gas turbine combustion of each gas turbine 1 is adjusted so that an electric power value of each gas-turbine electric power generator 12 with respect to each gas turbine 1 indicates a value obtained by multiplying a rated generated electric power value by the operation load ratio.

Additionally, to obtain a desired generated electric power amount as the electric power-line-end electric power value, the open degree of each duct-combustor fuel flow rate adjustment valve 51 is controlled to adjust combustion support of each duct combustor 31. At this time, it is monitored that the actually measured outlet temperature of the duct combustor 31 is not larger than the allowable temperature. When the outlet temperature becomes at a value which is not less than the allowable temperature, a routine starting from the determination of the minimum number of the gas turbines 1 is redone.

When a slight increase of a demand for freshwater occurs for a short time, the open degree of the steam flow rate adjustment valve 52 for the heat source is increased, the surplus steam amount 30 indicating the predetermined allowable value decreases, and the flow rate of steam 71 for the heat source can be increased. Even an internal fluctuation of the electric power-generating and desalination combined plant itself can be similarly handled.

The open degree of the steam flow rate adjustment valve 52 for the desalination-facility heat source does not have to be controlled based on the manufactured freshwater amount as described above, and values of a flow rate, a temperature, and a pressure of the steam 71 for the desalination-facility heat source may be measured to calculate enthalpy of the steam 71 for the heat source. In this case, the open degree may be controlled so that the calculated enthalpy becomes equal to an enthalpy value required for desalination water to satisfy the demand for freshwater.

Moreover, it may be assumed that the value of the pressure of the steam 71 for the desalination-facility heat source does not largely change. In this case, a quantity of heat of the steam 71 for the desalination-facility heat source may be calculated from the flow rate value and the temperature value only. In this case, the open degree may be controlled so that the quantity of heat is equal to that required for manufacturing freshwater to satisfy the demand for freshwater.

Furthermore, the open degree of the steam flow rate adjustment valve 52 for the desalination-facility heat source may be predetermined depending on a period such as season or time zone before the plant is operated.

As described above, the flow rate of the gas turbine fuel 7 is adjusted while the electric power value of each gas-turbine electric power generator 12 is monitored. However, the flow rate of the gas turbine fuel 7 corresponding to a target value of the operation load ratio may be calculated based on the characteristics of the gas turbine 1, and the open degree of each gas-turbine fuel flow rate adjustment valve 50 may be controlled.

Furthermore, as described above, a flow rate of duct combustor fuel 25 is adjusted to match the desired generated electric power amount while the electric power-line-end electric power value is monitored, but the flow rate of the duct combustor fuel 25 corresponding to the desired generated electric power amount may be calculated based on the characteristics of the electric power-generating and desalination combined plant to control the open degree of each duct-combustor fuel flow rate adjustment valve 51.

In addition, the combustions of the gas turbine 1 and the duct combustor 31 do not have to be controlled based on the flow rates of the gas turbine fuel 7 and the duct combustor fuel 25, and another method such as flow rate adjustment of combustion air 6 may be used.

FIGS. 4 to 6 show a case where three gas turbines 1, the single steam turbine 11, and the single desalination facility 14 are arranged, but any number of these constituting devices may be arranged.

In a case where the electric power-generating and desalination combined plant is operated in this manner, when the generating efficiency during the partial load operation is improved while keeping restrictions on materials for use in the exhaust gas boiler 9 and the duct combustor 31, the total annual fuel consumption can be reduced. Automatic control of the combined plant as described above will eliminate a possibility of erroneous operation, and reliability is improved.

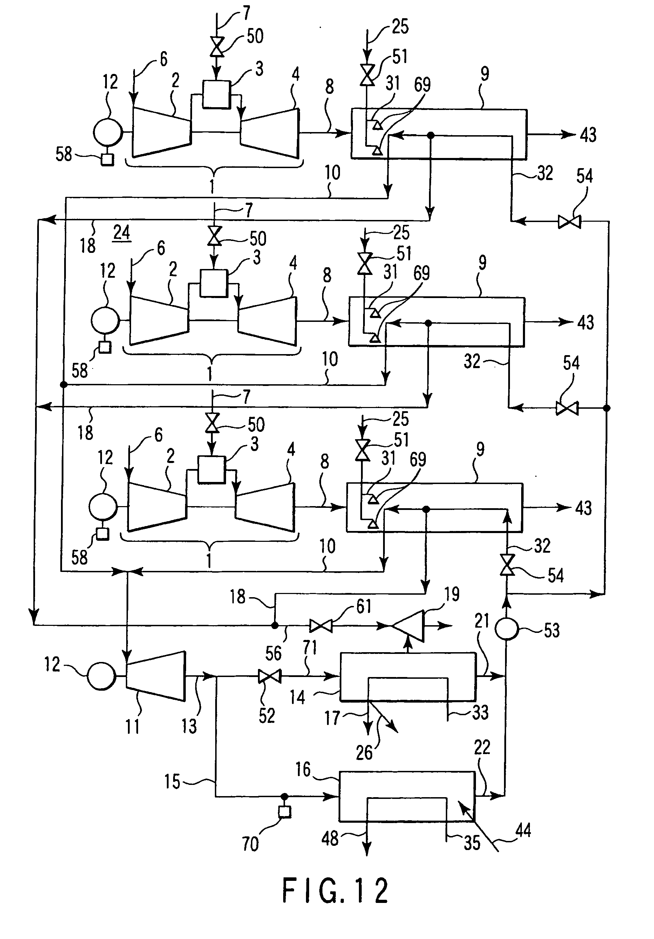

A sixth embodiment of the present invention will be described with reference to FIG. 12.

In FIG. 12, the same components as those of FIG. 8 are denoted with the same reference numerals, description thereof is omitted, and different respects will be described herein.

In the sixth embodiment, as shown in FIG. 12, for example, a multistage flash system or a multistage utility system is used in a desalination facility 14. All or a part of extracted steam 18 extracted from an exhaust gas boiler 9 is guided as extracted ejection steam (first extracted steam) 56 to an ejector 19 in the desalination facility 14.

A pressure in a desalination line of the desalination facility 14 is reduced using this ejector 19. The reduction of the pressure promotes evaporation of seawater 33. The passed steam 56 extracted for the ejector is discharged to the sea together with concentrated seawater 17. Water corresponding to the steam 56 extracted for the ejector and discharged to the sea is re-supplied as re-supply water 44 by a damp condenser 16.

Moreover, the electric power-generating and desalination combined plant is operated at an operation load ratio at which a surplus steam amount 30 is between zero and a predetermined allowable value. In this case, all of steam manufactured by exhaust gas boilers 9 does not form steam 71 for a desalination-facility heat source. However, even if the gas-turbine operation load ratio changes, a flow rate of the steam 56 extracted for the ejector does not largely change. Therefore, the same characteristic curves as those shown in FIGS. 3, 7, and 9 are obtained, and functions and effects similar to those of the above first to fifth embodiments are obtained.

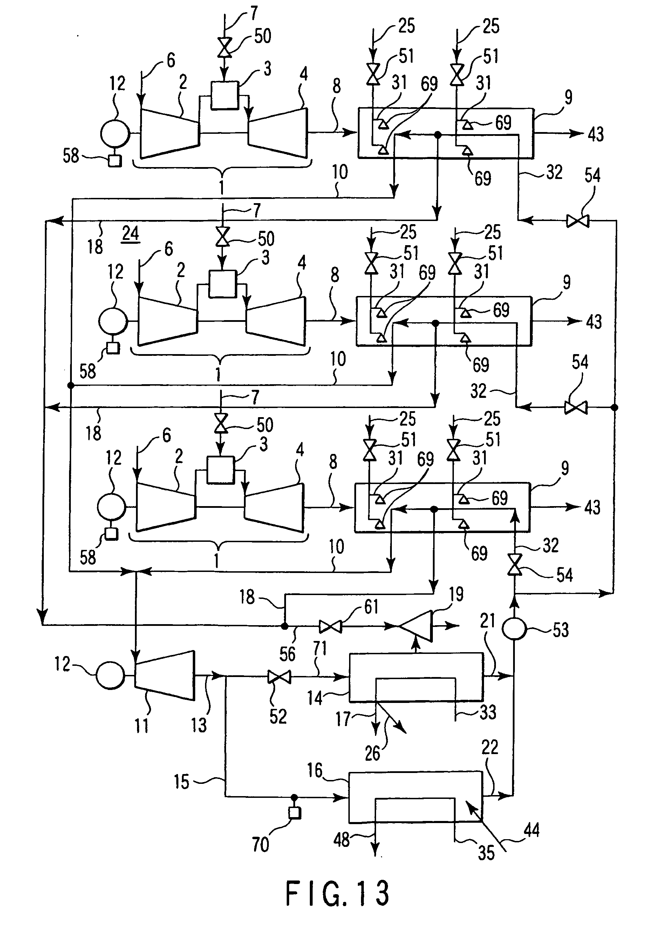

Moreover, as shown in FIG. 13, two duct combustors 31 may be disposed in a flow path of combustion exhaust gas 8 of each exhaust gas boiler 9.

FIGS. 12 and 13 show a piping constitution in which three gas turbines 1 are disposed, and all of extracted steam 18 from the three gas turbines is guided as steam 56 extracted for an ejector to a desalination facility 14, but all or a part of the extracted steam 18 of one or two gas turbines 1 may be guided as the steam 56 extracted for the ejector to the desalination facility 14.

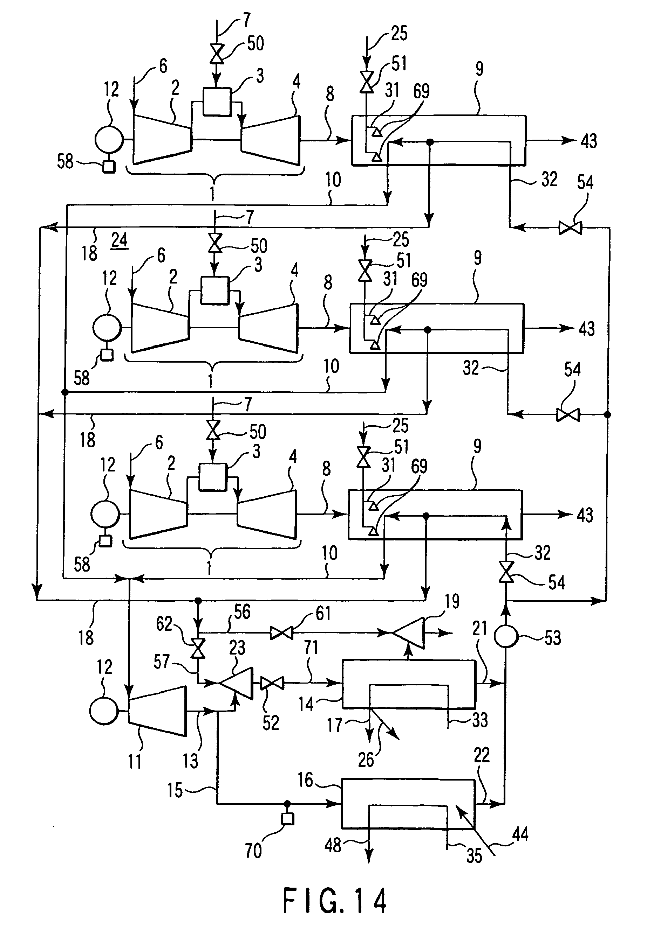

A seventh embodiment of the present invention will be described with reference to FIG. 14.

In FIG. 14, the same components as those of FIG. 12 are denoted with the same reference numerals, description thereof is omitted, and different respects will be described herein.

There is a case where a pressure of turbine exhaust steam 13 is lower than a required steam pressure for a desalination facility 14, when a new combined-cycle electric power generating facility is connected to the existing desalination facility 14.

To solve the problem, in the present embodiment, as shown in FIG. 14, all or a part of steam 18 extracted from each exhaust gas boiler 9 is passed as steam (second extracted steam) 57 extracted for a thermal compressor to a mainstream channel of a thermal compressor 23. A part of turbine exhaust steam 13 flows from a throat portion into the thermal compressor. The steam is combined to obtain steam 71 for a desalination-facility heat source, and the heat-source steam 71 is allowed to flow into the desalination facility 14.

In this case, the steam 57 extracted for the thermal compressor is combined with a part of the turbine exhaust steam 13 whose pressure has been raised by the thermal compressor 23, and the resultant steam 71 for the desalination-facility heat source flows into the desalination facility 14. Accordingly, the steam is usable as a heat source for desalination.

In this case, the extracted steam 18 which is not discharged from a steam turbine 11 forms a part of the steam 71 for the desalination-facility heat source. However, even when a gas-turbine operation load ratio changes, a flow rate of the steam 57 extracted for the thermal compressor does not largely change. Therefore, since the same characteristic curves as those shown in FIGS. 3, 7, and 9 can be obtained, functions and effects similar to those of the above first to seventh embodiments are obtained.

FIG. 14 shows a piping constitution in which three gas turbines 1 are disposed, and all of the extracted steam 18 from the three gas turbines is guided as the steam 57 extracted for the thermal compressor 23 to the desalination facility 14, but all or a part of the extracted steam 18 of one or two gas turbines 1 may be guided as the steam 57 extracted for the thermal compressor to the desalination facility 14.

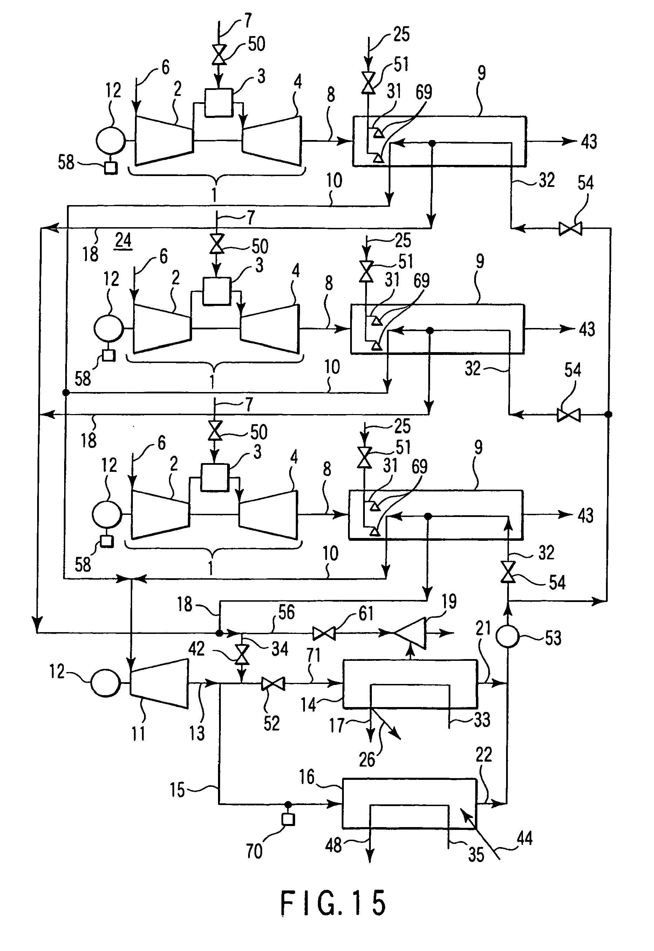

An eighth embodiment of the present invention will be described with reference to FIG. 15.

In FIG. 15, the same components as those of FIG. 12 are denoted with the same reference numerals, description thereof is omitted, and different respects will be described herein.

In the eighth embodiment, there is disposed a pipeline in which all or a part of extracted steam 18 extracted from exhaust gas boilers 9 is passed as extracted steam (third extracted steam) 34 for an additional desalination-facility heat source, and mixed with turbine exhaust steam 13 of a steam turbine 11. This pipeline is provided with an extracted-steam flow rate adjustment valve 42 for the additional desalination-facility heat source, extracted steam 56 for the additional desalination-facility heat source is combined with the turbine exhaust steam 13, and the steam is allowed to flow as steam 71 for the desalination-facility heat source into a desalination facility 14. That is, the heat source of the desalination facility 14 increases by the extracted steam 56 for the additional desalination-facility heat source.

Usually in an electric power-generating and desalination combined plant operated while a control is executed as described in the embodiments, in a case where a desired generated electric power amount is unchanged, and a desired freshwater amount increases for an only short time, the extracted-steam flow rate adjustment valve 42 for the additional desalination-facility heat source is opened, and the steam 71 for the desalination-facility heat source is set to be sufficient for realizing the desired freshwater amount. A gas-turbine operation load ratio is set to a value capable of realizing the desired generated electric power amount, when the plant is operated.

In this case, when an open degree of the extracted-steam flow rate adjustment valve 42 for the additional desalination-facility heat source disposed in the pipeline is adjusted, the steam 71 for the heat source to the desalination facility 14 can be obtained without any excess or deficiency even in a case where the steam is lacking. At this time, a surplus steam amount 30 is zero.

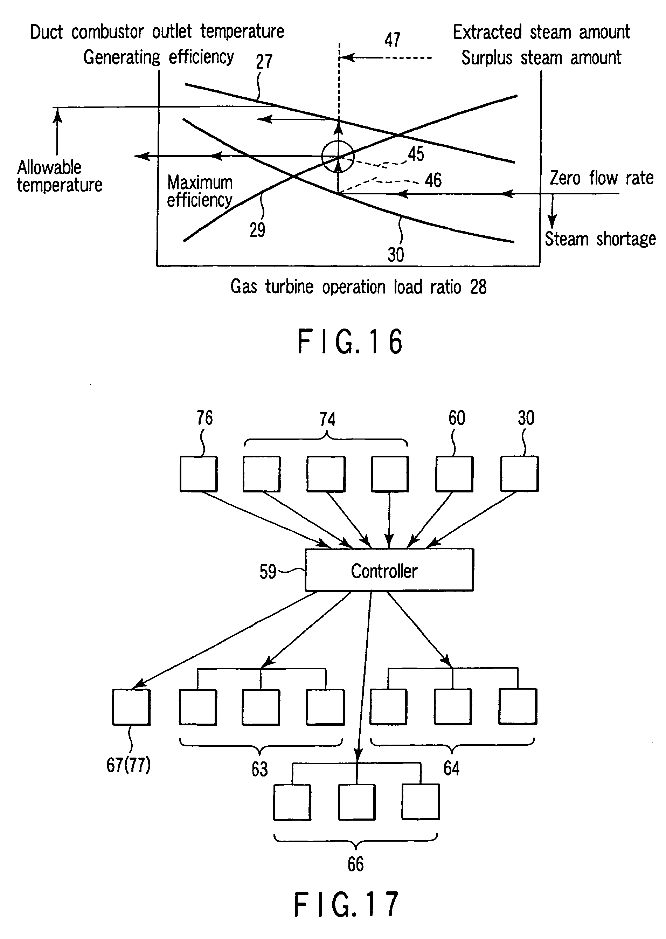

Here, FIG. 16 shows characteristic curves including partial curves of dot lines indicating a combined-cycle generating efficiency 29 and extracted steam 58 for the desalination-facility heat source in addition to those curves shown in FIG. 9.

In such constitution, the generating efficiency and the flow rate of the extracted steam 56 for the desalination-facility heat source are a generating efficiency 45 and an extracted steam amount 46, respectively.

Moreover, the gas-turbine operation load ratio is set to a value capable of realizing the desired generated electric power amount. Therefore, in a case where the desired generated electric power amount is unchanged, and the desired freshwater amount increases for the short time only, the extracted-steam flow rate adjustment valve 42 for the additional desalination-facility heat source is opened. The steam 71 for the desalination-facility heat source is set to a flow rate capable of realizing the desired freshwater amount without any excess or deficiency. Moreover, the gas-turbine operation load ratio is set to the value capable of realizing the desired generated electric power amount, when the plant is operated.

A range of the gas-turbine operation load ratio capable of operating the gas turbine 1 expands by the extracted steam 34 for the desalination-facility heat source. However, since the amount of the steam to the steam turbine 11 decreases, the generating efficiency 29 becomes lower than a maximum efficiency at a time when any steam 18 is not extracted. The expanded operation load ratio is in a range 47. The higher the operation load ratio is, the lower an outlet temperature 27 of each duct combustor 31 becomes. Therefore, the outlet temperature does not equal or exceed an allowable value owing to this operation switch.

FIG. 15 shows a piping constitution in which three gas turbines 1 are disposed, and all or a part of the steam 18 extracted from all the three gas turbines is guided as the extracted steam 34 for the additional desalination-facility heat source to the desalination facility 14, but the steam 18 extracted from one or two gas turbines 1 may be guided to the desalination facility 14.

A ninth embodiment of the present invention will be described with reference to FIGS. 16 and 17.

Here, the embodiment will be described in accordance with an electric power-generating and desalination combined plant of FIG. 15.

In the ninth embodiment, in the electric power-generating and desalination combined plant shown in FIG. 15, electric power generators 12 connected to all gas turbines 1 are provided with electric power meters 58 for gas-turbine electric power generators. There is disposed a flow meter 70 which measures a surplus steam amount of turbine exhaust steam 13 flowing from a steam turbine 11 into a damp condenser 16.

Furthermore, there is disposed an electric power-line-end electric power meter (not shown) which measures an electric power-line-end electric power value obtained by subtracting an electric power consumed by an operation of a device such as a pump 53 in the electric power-generating and desalination combined plant from electric powers generated by an electric power generator 12 connected to the steam turbine 11 and the electric power generators 12 connected to all of the gas turbines 1.

As shown in FIG. 17, into a controller 59, there are input gas-turbine electric power-generator electric power values 74, an electric power-line-end electric power value 60, and a surplus steam amount 30 which are measured by the gas-turbine electric power-generator electric power meters 58, the flow meter 70, and the electric power-line-end electric power meter, respectively. Moreover, a manufactured freshwater amount value 76 is inputted from a desalination facility 14 into the controller 59.

This controller 59 issues start/stop signals 66 to the gas turbines 1, and controls open degrees 63 of gas-turbine fuel flow rate adjustment valves 50 and open degrees 64 of duct-combustor fuel flow rate adjustment valves 51 based on characteristics of a gas-turbine operation load ratio obtained beforehand from FIG. 3. In a case where a desired generated electric power amount is unchanged, and a desired freshwater amount increases for a short time only, the controller 59 adjusts an open degree 67 (77) of a steam flow rate adjustment valve 42 for an additional desalination-facility heat source.

Next, there will be described an operation of the electric power-generating and desalination combined plant by this controller 59.

In a case where the electric power-generating and desalination combined plant is usually operated while executing a control as described in the first to third embodiments, when the desired generated electric power amount is unchanged, and the desired freshwater amount increases for the short time only, the following operation is performed.

While the open degree 67 of the exhaust gas 43 for the additional desalination-facility heat source is adjusted, and steam flow rate 71 for the desalination-facility heat source is increased so that the manufactured freshwater amount value 76 reaches a desired freshwater amount, the open degrees 63 of all of the gas-turbine fuel flow rate adjustment valves 50 are controlled so that the gas-turbine operation load ratio is set to a value capable of realizing the desired generated electric power amount. Combustions of all of the gas turbines 1 are adjusted.

The gas-turbine operation load ratio is obtained beforehand from the characteristics shown in FIG. 3, and the gas turbine combustion of each gas turbine 1 is adjusted so that the electric power value 74 of the gas-turbine electric power generator with respect to each gas turbine 1 indicates a value obtained by multiplying a rated generated electric power value by the operation load ratio. Additionally, to obtain a desired generated electric power amount as the electric power-line-end electric power value 60, the open degrees 64 of the duct-combustor fuel flow rate adjustment valves 51 are controlled, and combustion supports of duct combustors 31 are adjusted.

The open degree 67 of the extracted-steam flow rate adjustment valve 42 for the additional desalination-facility heat source does not have to be controlled based on the manufactured freshwater amount value 76 as described above. However, values of a flow rate, a temperature, and a pressure of the steam 71 for a desalination-facility heat source may be measured to calculate enthalpy of the steam 71 for the desalination-facility heat source. In this case, the open degree may be controlled so that the calculated enthalpy becomes equal to an enthalpy value required for desalination water to satisfy a demand for freshwater.

Moreover, it may be assumed that the value of the pressure of the steam 71 for the desalination-facility heat source does not largely change. In this case, a quantity of heat of the steam 71 for the desalination-facility heat source may be calculated from the flow rate value and the temperature value only. In this case, the open degree may be controlled so that the quantity of heat is equal to that required for desalination water to satisfy the demand for freshwater.

Furthermore, an open degree of a steam flow rate adjustment valve 52 for the desalination-facility heat source may be predetermined depending on a period such as season or time zone before the plant is operated.

In the above embodiment, while the electric power values 74 of the electric power generators for the gas turbines are monitored, and the flow rate of gas turbine fuel 7 is adjusted. However, the flow rate of the gas turbine fuel 7 corresponding to a target value of the operation load ratio may be calculated based on the characteristics of the gas turbines 1, and the open degrees of the gas-turbine fuel flow rate adjustment valves 50 may be controlled.

Moreover, as described above, while the electric power-line-end electric power value 60 is monitored, the flow rate of the fuel for the duct combustors 31 is adjusted in accordance with the desired generated electric power amount, but a flow rate of duct combustor fuel 25 corresponding to the desired generated electric power amount may be calculated, and the open degrees 64 of the duct-combustor fuel flow rate adjustment valves 51 may be controlled.

Furthermore, the combustions of the gas turbines 1 and the duct combustors 31 do not have to be controlled by the flow rates of the gas turbine fuel 7 and the duct combustor fuel 25, and another method such as adjustment of the flow rate of combustion air 6 may be used.

FIG. 15 shows a case where three gas turbines 1, the single steam turbine 11, and the single desalination facility 14 are disposed, but any number of these constituting devices may be disposed.

Next, there will be described a tenth embodiment of an electric power-generating and desalination combined plant in the present invention with reference to FIG. 14.

Since a constitution of the system shown in FIG. 14 has been described above, description thereof is omitted. There will be described an operation method in a case where a desired generated electric power amount is unchanged, and a desired freshwater amount increases for a short time only.

The electric power-generating and desalination combined plant shown in FIG. 14 is usually operated while a control is executed as described in the first to third embodiments. At this time, in a case where the desired generated electric power amount is unchanged, and the desired freshwater amount increases for the short time only, a thermal-compressor extracted steam flow rate adjustment valve 62 is opened to increase a flow rate of extracted steam 57 for a thermal compressor.

Then, a part of flow rate of steam-turbine exhaust steam 13 sucked from a throat portion of a thermal compressor 23 also increases. Steam 71 for a desalination-facility heat source increases which is a total of a part of the steam-turbine exhaust steam 13 sucked into the thermal compressor 23 and the extracted steam 57 for the thermal compressor.

Accordingly, the steam 71 for the desalination-facility heat source is set to a flow rate capable of realizing a desired freshwater amount without any excess or deficiency, and a gas-turbine operation load ratio is set to a value capable of realizing the desired generated electric power amount, when the plant is operated. The higher the operation load ratio is, the lower a duct-combustor outlet temperature becomes. Therefore, the outlet temperature does not equal or exceed an allowable value owing to this operation switch.

FIG. 14 shows a piping constitution in which three gas turbines 1 are disposed, and all or a part of extracted steam 18 from the three gas turbines is guided as the steam 57 extracted for the thermal compressor 23 to a desalination facility 14, but the steam 18 extracted from one or two gas turbines 1 may be guided to the desalination facility 14.

FIG. 14 shows a case where three gas turbines 1, a single steam turbine 11, and a single desalination facility 14 are disposed, but any number of these constituting devices may be disposed.

Next, there will be described an eleventh embodiment of a electric power-generating and desalination combined plant in the present invention with reference to FIGS. 14, 16, and 17.

In the electric power-generating and desalination combined plant shown in FIG. 14, electric power generators 12 connected to all gas turbines 1 are provided with gas-turbine electric power-generator electric power meters 58, and there is disposed a flow meter 70 which measures a surplus steam amount 30. There is disposed an electric power-line-end electric power meter (not shown) which measures an electric power-line-end electric power value 60 obtained by subtracting an electric power consumed by a device such as a pump 53 in an electric power-generating and desalination combined plant 24 from electric powers generated by all electric power generators 12 including an electric power generator 12 connected to a steam turbine 11.

As shown in FIG. 17, into a controller 59, there are input all of measured gas-turbine electric power-generator electric power values 74, the electric power-line-end electric power value 60, and the surplus steam amount 30. Furthermore, a manufactured freshwater amount value 76 is input from a desalination facility 14 into the controller 59.

The electric power-generating and desalination combined plant shown in FIG. 14 is usually operated while executing a control as described in the first to third embodiments. At this time, in a case where a desired generated electric power amount is unchanged, and a desired freshwater amount increases for a short time only, the following operation is operated. It is to be noted that in FIG. 17, an open degree 67 of a steam flow rate adjustment valve 43 for an additional desalination-facility heat source will be described as an open degree 77 of a thermal-compressor steam flow rate adjustment valve 62.

The open degree 77 of the thermal-compressor steam flow rate adjustment valve 62 is adjusted to set the manufactured freshwater amount value 76 to a desired freshwater amount. When this open degree 77 is increased, steam 57 extracted for a thermal compressor increases, and a flow rate of a part of steam-turbine exhaust steam 13 sucked from a throat of a thermal compressor 23 also increases. Therefore, steam 71 for the desalination-facility heat source increases.

While increasing the flow rate of the steam 71 for the desalination-facility heat source, open degrees 63 of all of gas-turbine fuel flow rate adjustment valves 50 are controlled to set a gas-turbine operation load ratio to a value capable of realizing a desired generated electric power amount, and combustions of all of the gas turbines 1 are adjusted. The gas-turbine operation load ratio is obtained beforehand from characteristics shown in FIG. 3. The gas-turbine combustions of the gas turbines 1 are adjusted to set the gas-turbine electric power-generator electric power value 76 with respect to each gas turbine 1 to a value obtained by multiplying a rated generated electric power value by the operation load ratio. Additionally, open degrees 64 of duct-combustor fuel flow rate adjustment valves 51 are controlled to set the electric power-line-end electric power value 60 to a desired generated electric power amount, and combustion supports by duct combustors 31 are adjusted.

The open degree 77 of the thermal-compressor steam flow rate adjustment valve 62 does not have to be controlled based on the manufactured freshwater amount as described above, and values of a flow rate, a temperature, and a pressure of the steam 71 for the desalination-facility heat source may be measured. Enthalpy of the steam 71 for the heat source may be calculated, and the open degree may be controlled so that this enthalpy value becomes equal to that required for desalination water to satisfy a demand for freshwater.

Moreover, it may be assumed that the value of the pressure of the steam 71 for the desalination-facility heat source does not largely change. A quantity of heat of the steam 71 for the desalination-facility heat source is calculated from the flow rate value and the temperature value only. In this case, it may be assumed that the quantity of heat is equal to that required for desalination water to satisfy the demand for freshwater, when the open degree of the steam flow rate adjustment valve 52 for the desalination-facility heat source is controlled.

Furthermore, the open degree of the steam flow rate adjustment valve 52 for the desalination-facility heat source may be predetermined depending on a period such as season or time zone before the plant is operated.

As described above, the flow rate of gas turbine fuel 7 is adjusted while the electric power value of each gas-turbine electric power generator 12 is monitored. However, the flow rate of the gas turbine fuel 7 corresponding to a target value of the operation load ratio may be calculated based on characteristics of the gas turbines 1, and the open degree of each gas-turbine fuel flow rate adjustment valve 50 may be controlled.

Furthermore, as described above, the flow rate of the fuel of each duct combustor 31 is adjusted to match the desired generated electric power amount while the electric power-line-end electric power value 60 is monitored, but the flow rate of the duct combustor fuel 25 corresponding to the desired generated electric power amount may be calculated based on the characteristics of the electric power-generating and desalination combined plant to control the open degree 64 of the duct-combustor fuel flow rate adjustment valve 51.

Furthermore, the combustions of the gas turbines 1 and the duct combustors 31 do not have to be controlled based on the flow rates of the gas turbine fuel 7 and the duct combustor fuel 25, and another method such as flow rate adjustment of combustion air 6 may be used.

FIG. 14 shows a piping constitution in which three gas turbines 1 are disposed, and all or a part of extracted steam 18 is guided as the steam 57 extracted for the thermal compressor to the desalination facility 14, but the steam 18 extracted from one or two gas turbines 1 may be guided to the desalination facility 14.

FIG. 14 shows a case where three gas turbines 1, the single steam turbine 11, and the single desalination facility 14 are arranged, but any number of these constituting devices may be arranged.

In the first to eleventh embodiments, it has been described above a case where freshwater is manufactured from seawater in the desalination facility 14. However, when discharged water (waste water) from a chemical plant, for example, may be introduced into the desalination facility 14 instead of seawater, concentrated waste water and purified water can be obtained from the discharged water (waste water) by a similar method.

In this case, the desalination facility 14 is used as a discharged water purifying device, and river water, for example, may be used as cooling water instead of the cooling seawater.

In this case, discharged water (waste water) can be purified. Therefore, discharged water disposal is possible, and manufactured purified water can be effectively utilized.

## Claims

1. In a method of operating an electric power-generating and desalination combined plant which comprises: a combined-cycle electric power-generating facility including a gas turbine (1), an exhaust gas boiler (9) having a duct combustor (31) and heating supply water by heat of an exhaust gas introduced from the gas turbine to generate steam, and a steam turbine (11) operated by use of the steam generated by the exhaust gas boiler (9) as an operating fluid, the combined-cycle electric power-generating facility being connected to a desalination facility (14) which manufactures freshwater by use of exhaust steam of the steam turbine (11) as a heat source, an operation load ratio of the gas turbine (1) and combustion of the duct combustor (31) being adjusted and an operation being performed to set both of a generated electric power amount and a freshwater amount to desired values,
the operating method **characterized by** comprising the step of operating the gas turbine (1) at an operation load ratio at which an amount of surplus steam that is not used in the desalination facility (14) among the exhaust steam of the steam turbine (11) is in a range of zero to a predetermined allowable value.

2. The method of operating the electric power-generating and desalination combined plant according to claim 1, **characterized by** further comprising the steps of:
measuring a flow rate of the steam which is not used in the desalination facility to obtain the surplus steam amount; and
controlling the combustion of the gas turbine (1),
the combustion of the duct combustor (31), and the flow rate of the steam for use as the heat source of the desalination facility (14), respectively, to obtain an
operation load ratio of the gas turbine (1) at which the surplus steam amount is in the range of zero to the predetermined allowable value.

3. In a method of operating an electric power-generating and desalination combined plant which comprises: a combined-cycle electric power-generating facility including a plurality of gas turbines (1), each gas turbine (1) having an exhaust gas boiler (9) having a duct combustor (31) and heating supply water by heat of an exhaust gas introduced from the gas turbine (1) to generate steam,
and a steam turbine (11) operated by use of the steam generated by the exhaust gas boiler (9) as an operating fluid, the combined-cycle electric power-generating facility being connected to a desalination facility (14) which manufactures freshwater by use of exhaust steam of the steam turbine (11) as a heat source, the number of operating gas turbines (1), an operation load ratio of the gas turbine, and combustion of the duct combustor (31) being adjusted and an operation being performed to set both of a generated electric power amount and a freshwater amount to desired values,
the operating method **characterized by** comprising the steps of:
setting the number of the operating gas turbines (1) to the minimum number of the operating gas turbines capable of realizing the desired generated electric power amount; and
operating the minimum number of the operating gas-turbines (1) at an operation load ratio at which an amount of the surplus steam (15) that is not used in the desalination facility (14) among the exhaust steam of the steam turbine (11) is in a range of zero to a predetermined allowable value.

4. The method of operating the electric power-generating and desalination combined plant according to claim 3, **characterized in that** the number of the operating gas turbines (1) is the number of the operating gas turbines with which the desired generated electric power amount can be realized and with which all outlet temperatures of the duct combustor (31) are not more than allowable temperatures.

5. The method of operating the electric power-generating and desalination combined plant according to claim 3 or claim 4, **characterized by** further comprising the steps of:
measuring a flow rate of the steam which is not used in the desalination facility (14) to obtain the surplus steam amount; and
controlling the number of the operating gas turbines (1), the combustions of the gas turbines (1), the combustion of the duct combustor (31), and the flow rate of the steam for use as the heat source of the desalination facility (14), respectively, to obtain an operation load ratio of the gas turbine (1) at which the surplus steam amount is in the range of zero to the predetermined allowable value.

6. The method of operating the electric power-generating and desalination combined plant according to any one of claims 3 to 5, **characterized by** further comprising the steps of:
measuring a flow rate of the steam which is not used in the desalination facility (14) and an outlet temperature of the duct combustor (31), respectively;
controlling the number of the operating gas turbines (1) into the minimum number of the operating gas turbines with which all of the outlet temperatures of the duct combustor (31) are not more than allowable temperatures based on a measured value of the outlet temperature of the duct combustor (31); and
controlling the combustion of the gas turbine (1), the combustion of the duct combustor (31), and the flow rate of the steam for use as the heat source in the desalination facility (14) based on a measured value of the flow rate of the steam which is not used in the desalination facility (14) to obtain an operation load ratio of the gas turbine (1) at which the surplus steam (15) amount is in the range of zero to the predetermined allowable value.

7. The method of operating the electric power-generating and desalination combined plant according to any one of claims 1 to 6, **characterized by** further comprising the steps of:
circulating first extracted steam extracted from the exhaust gas boiler (9) as an operating fluid of an ejector; and
reducing a pressure in a freshwater line of the desalination facility (14) by the ejector.

8. The method of operating the electric power-generating and desalination combined plant according to any one of claims 1 to 7, **characterized by** further comprising the steps of:
circulating second extracted steam extracted from the exhaust gas boiler (9) as an operating fluid of a thermal compressor (23);
raising a pressure of the exhaust steam of the steam turbine (11) by the thermal compressor (23); and
supplying the steam to the desalination facility (14).

9. The method of operating the electric power-generating and desalination combined plant according to any one of claims 1 to 8, **characterized by** further comprising the steps of:
mixing third extracted steam extracted from the exhaust gas boiler (9) with the exhaust steam of the steam turbine (11);
supplying the third extracted steam as a heat source for use in the desalination facility (14); and
switching the operation to set the operation load ratio of the gas turbine (1) to a value capable of realizing a desired generated electric power amount.

10. The method of operating the electric power-generating and desalination combined plant according to claim 9, **characterized by** further comprising the step of:
controlling the number of the operating gas turbines (1), the combustions of the gas turbines (1), and the combustion of the duct combustor (31), respectively, while controlling a flow rate of the third extracted steam so that the flow rate of the steam for use as the heat source in the desalination facility (14) is not insufficient for the manufacturing of the desired freshwater amount.

11. The method of operating the electric power-generating and desalination combined plant according to claim 8, **characterized by** further comprising the step of:
increasing the flow rate of the second extracted steam flowing into the thermal compressor (23) so that the operation is switchable to set the operation load ratio of the gas turbine (1) to a value capable of realizing the desired generated electric power amount.

12. The method of operating the electric power-generating and desalination combined plant according to claim 11, **characterized by** further comprising the step of:
controlling the number of the operating gas turbines (1), the combustions of the gas turbines (1), and the combustion of the duct combustor (31), respectively, while controlling the flow rate of the second extracted steam so that the flow rate of the steam for use as the heat source in the desalination facility (14) is not insufficient for the manufacturing of the desired freshwater amount.

13. The method of operating the electric power-generating and desalination combined plant according to any one of claims 1 to 12, **characterized in that** the desalination facility (14) manufactures freshwater (26) from seawater (33).

14. The method of operating the electric power-generating and desalination combined plant according to any one of claims 1 to 12, **characterized in that** the desalination facility (14) manufactures purified water from discharged water or waste water.

15. An electric power-generating and desalination combined plant which comprises: a combined-cycle electric power-generating facility including at least a gas turbine (1); the at least one gas turbine comprising an exhaust gas boiler (9) having a duct combustor (31) and heating supply water by heat of an exhaust gas introduced from the gas turbine (1) to generate steam, and a steam turbine (11) operated by use of the steam generated by the exhaust gas boiler (9) as an operating fluid, the combined-cycle electric power-generating facility being connected to a desalination facility (14) which manufactures freshwater (26) by use of exhaust steam of the steam turbine (11) as a heat source, the plant (24) further comprises an operation device (59) which adjusts combustion of the duct combustor (31) and which performs an operation to set both of a generated electric power amount and a freshwater amount to desired values,
**characterized in that** the operation device comprises:
an electric power meter (58) for a gas-turbine electric power generator (12) which measures an electric power of the electric power generator driven by the gas turbine (1);
a flow rate meter (70) which measures a surplus steam amount of turbine exhaust steam flowing from the steam turbine (11) into the desalination facility (14);
an electric power-line-end electric power meter (73) which measures an electric power-line-end electric power value obtained by subtracting an electric power consumed by a device operation in the plant from electric powers generated by an electric power generator for the steam turbine (11) and the electric power generator for the gas turbine (1); and
control means (59) into which the electric power values and the surplus steam amount measured by the meters are input and which controls a flow rate of fuel supplied to the gas turbine (1) and a flow rate of fuel supplied to the duct combustor (31) disposed in the exhaust gas boiler (9) to obtain an operation load ratio of the gas turbine (1) at which the flow rate of the steam that is not used in the desalination facility (14) among the exhaust steam of the steam turbine (11) is in a range of zero to a predetermined allowable value.

## Patentansprüche

1. Bei einem Verfahren des Betriebs eines Kombikraftwerks zur Erzeugung elektrischer Energie und zur Wasserentsalzung, das aufweist:
eine elektrische Energie erzeugende Kombizyklus-Einrichtung mit einer Gasturbine (1), einem Abgasboiler (9), welcher eine Kanal-Brennkammer (31) hat, und Zuflusswasser durch Wärme eines von der Gasturbine zugeführten Abgases zum Erzeugen von Dampf erhitzt, und eine Dampfturbine (11), die durch die Verwendung des Dampfs, der durch den Abgasboiler (9) erzeugt wird, als ein Betriebsfluid angetrieben wird, wobei die elektrische Energie erzeugende Kombizyklus-Einrichtung mit einer Entsalzungseinrichtung (14) verbunden ist, die Frischwasser durch Verwendung von Abdampf der Dampfturbine (11) als Wärmequelle herstellt, wobei ein Betriebslastverhältnis der Gasturbine (1) und eine Verbrennung der Kanal-Brennkammer (31) so eingestellt und ein Betrieb so ausgeführt wird, dass sowohl eine erzeugte elektrische Energiemenge als auch eine Frischwassermenge auf gewünschte Werte eingestellt werden,
wobei das Betriebsverfahren **dadurch gekennzeichnet ist, dass** es den Schritt des Betriebs der Gasturbine (1) bei einem Betriebslastverhältnis, bei dem eine Menge von Überschussdampf von dem Abdampf der Dampfturbine (11), der nicht in der Entsalzungseinrichtung (14) verwendet wird, in einem Bereich von null bis zu einem vorbestimmten zulässigen Wert ist, umfasst.

2. Das Verfahren des Betriebs des Kombikraftwerks zur Erzeugung elektrischer Energie und zur Wasserentsalzung gemäß Anspruch 1, **dadurch gekennzeichnet, dass** es ferner folgende Schritte aufweist:
Messen einer Strömungsmenge des Dampfs, der nicht in der Entsalzungseinrichtung verwendet wird, um die Überschussdampfmenge zu erhalten, und
jeweiliges Steuern der Verbrennung der Gasturbine (1), der Verbrennung der Kanal-Brennkammer (31), und der Strömungsmenge des Dampfs zur Verwendung als Wärmequelle der Entsalzungseinrichtung (14), um ein Betriebslastverhältnis der Gasturbine (1) zu erhalten, bei dem die Überschussdampfmenge in dem Bereich von null bis zu dem vorbestimmten zulässigen Wert ist.

3. Bei einem Verfahren des Betriebs eines Kombikraftwerks zur Erzeugung elektrischer Energie und zur Wasserentsalzung, das aufweist:
eine elektrische Energie erzeugende Kombizyklus-Einrichtung mit einer Vielzahl von Gasturbinen (1), wobei jede Gasturbine (1) einen Abgasboiler (9) hat, der eine Kanal-Brennkammer (31) aufweist und Zuflusswasser durch Wärme eines von der Gasturbine (1) zugeführten Abgases, zum Erzeugen von Dampf erhitzt, und mit einer Dampfturbine (11), die durch die Verwendung des Dampfs, der durch den Abgasboiler (9) erzeugt wird, als ein Betriebsfluid, angetrieben wird, wobei die elektrische Energie erzeugende Kombizyklus-Einrichtung mit einer Entsalzungseinrichtung (14) verbunden ist, die Frischwasser durch die Verwendung von Abdampf der Dampfturbine (11) als eine Wärmequelle herstellt, wobei die Anzahl von betriebenen Gasturbinen (1), ein Betriebslastverhältnis der Gasturbine, und eine Verbrennung der Kanal-Brennkammer (31) eingestellt und ein Betrieb so ausgeführt wird, dass sowohl eine erzeugte elektrische Energiemenge als auch eine Frischwassermenge auf gewünschte Werte eingestellt werden,
wobei das Betriebsverfahren **dadurch gekennzeichnet ist, dass** es die folgenden Schritte aufweist:
Einstellen der Anzahl der betriebenen Gasturbinen (1) auf die Minimalanzahl der betriebenen Gasturbinen, die in der Lage sind, die gewünschte erzeugte elektrische Energiemenge zu realisieren, und
Betreiben der Minimalanzahl der betriebenen Gasturbinen (1) bei einem Betriebslastverhältnis, bei dem eine Menge von Überschussdampf (15) von dem Abgasdampf der Dampfturbine (11), der nicht in der Entsalzungseinrichtung (14) verwendet wird, in einem Bereich von null bis zu einem vorbestimmten zulässigen Wert ist.

4. Das Verfahren des Betriebs des Kombikraftwerks zur Erzeugung elektrischer Energie und zur Wasserentsalzung gemäß Anspruch 3, **dadurch gekennzeichnet, dass** die Anzahl der betriebenen Gasturbinen (1) die Anzahl der betriebenen Gasturbinen ist, bei der die gewünschte erzeugte elektrische Energiemenge realisiert werden kann und bei der alle Auslasstemperaturen der Kanal-Brennkammer (31) nicht höher sind als zulässige Temperaturen.

5. Das Verfahren des Betriebs des Kombikraftwerks zur Erzeugung elektrischer Energie und zur Wasserentsalzung gemäß Anspruch 3 oder Anspruch 4, **dadurch gekennzeichnet, dass** es ferner die folgenden Schritte aufweist:
Messen einer Strömungsmenge des Dampfs, der nicht in der Entsalzungseinrichtung (14) verwendet wird, um die Überschussdampfmenge zu erhalten, und
jeweiliges Steuern der Anzahl der betriebenen Gasturbinen (1), der Verbrennungen der Gasturbinen (1), der Verbrennung der Kanal-Brennkammer (31), und der Strömungsmenge des Dampfs zur Verwendung als die Wärmequelle der Entsalzungseinrichtung (14), um ein Betriebslastverhältnis der Gasturbine (1) zu erhalten, bei dem die Überschussdampfmenge in dem Bereich von null bis zu dem vorbestimmten zugelassenen Wert ist.

6. Das Verfahren des Betriebs des Kombikraftwerks zur Erzeugung elektrischer Energie und zur Wasserentsalzung gemäß einem der Ansprüche 3 bis 5, **dadurch gekennzeichnet, dass** es ferner die folgenden Schritte aufweist:
jeweiliges Messen einer Strömungsmenge des Dampfs, der nicht in der Entsalzungseinrichtung (14) verwendet wird, und einer Auslasstemperatur der Kanal-Brennkammer (31),
Steuern der Anzahl der betriebenen Gasturbinen (1) hin zu einer Minimalanzahl der betriebenen Gasturbinen, bei der alle Auslasstemperaturen der Kanal-Brennkammer (31) nicht höher sind als zulässige Temperaturen, basierend auf einem gemessenen Wert der Auslasstemperatur der Kanal-Brennkammer (31), und
Steuern der Verbrennung der Gasturbine (1), der Verbrennung der Kanal-Brennkammer (31), und der Strömungsmenge des Dampfs zur Verwendung als die Wärmequelle in der Entsalzungseinrichtung (14), basierend auf einem gemessenen Wert der Strömungsmenge des Dampfs, der nicht in der Entsalzungseinrichtung (14) verwendet wird, um ein Betriebslastverhältnis der Gasturbine (1) zu erhalten, bei dem die Überschussdampfmenge (15) in dem Bereich von null bis zu dem vorbestimmten zulässigen Wert ist.

7. Das Verfahren des Betriebs des Kombikraftwerks zur Erzeugung elektrischer Energie und zur Wasserentsalzung gemäß einem der Ansprüche 1 bis 6, **dadurch gekennzeichnet, dass** es ferner die folgenden Schritte aufweist:
Zirkulieren von erstem extrahiertem Dampf, der von dem Abgasboiler (9) extrahiert wird, als ein Betriebsfluid eines Ejektors, und
Reduzieren eines Drucks in einer Frischwasserleitung der Entsalzungseinrichtung (14) durch den Ejektor.

8. Das Verfahren des Betriebs des Kombikraftwerks zur Erzeugung elektrischer Energie und zur Wasserentsalzung gemäß einem der Ansprüche 1 bis 7, **dadurch gekennzeichnet, dass** es ferner die folgenden Schritte aufweist:
Zirkulieren von zweitem extrahiertem Dampf, der von dem Abgasboiler (9) extrahiert wird, als ein Betriebsfluid eines Thermokompressors (23),
Erhöhen eines Drucks des Abdampfs der Dampfturbine (11) durch den Thermokompressor (23), und
Zuführen des Dampfs zu der Entsalzungseinrichtung (14).

9. Das Verfahren des Betriebs des Kombikraftwerks zur Erzeugung elektrischer Energie und zur Wasserentsalzung gemäß einem der Ansprüche 1 bis 8, **dadurch gekennzeichnet, dass** es ferner die folgenden Schritte umfasst:
Mischen von drittem extrahiertem Dampf, der von dem Abgasboiler (9) extrahiert wird, mit dem Abdampf der Dampfturbine (11),
Zuführen des dritten extrahierten Dampfs als eine Wärmequelle zur Verwendung in der Entsalzungseinrichtung (14), und
Schalten des Betriebs, um das Betriebslastverhältnis der Gasturbine (1) auf einen Wert einzustellen, der in der Lage ist, eine gewünschte erzeugte elektrische Energiemenge zu realisieren.

10. Das Verfahren des Betriebs des Kombikraftwerks zur Erzeugung elektrischer Energie und zur Wasserentsalzung gemäß Anspruch 9, **dadurch gekennzeichnet, dass** es ferner den Schritt aufweist:
jeweiliges Steuern der Anzahl der betriebenen Gasturbinen (1), der Verbrennungen der Gasturbinen (1), und der Verbrennung der Kanal-Brennkammer (31), während eine Strömungsmenge des dritten extrahierten Dampfs so gesteuert wird, dass die Strömungsmenge des Dampfs zur Verwendung als die Wärmequelle in der Entsalzungseinrichtung (14) für die Herstellung der gewünschten Frischwassermenge nicht unzureichend ist.

11. Das Verfahren des Betriebs des Kombikraftwerks zur Erzeugung elektrischer Energie und zur Wasserentsalzung gemäß Anspruch 8, **dadurch gekennzeichnet, dass** es ferner den Schritt aufweist:
Erhöhen der Strömungsmenge des zweiten extrahierten Dampfs, der in den Thermokompressor (23) strömt, sodass der Betrieb schaltbar ist, um das Betriebslastverhältnis der Gasturbine (1) auf einen Wert, der in der Lage ist, die gewünschte erzeugte elektrische Energiemenge zu realisieren, einzustellen.

12. Das Verfahren des Betriebs des Kombikraftwerks zur Erzeugung elektrischer Energie und zur Wasserentsalzung gemäß Anspruch 11, **dadurch gekennzeichnet, dass** es ferner den Schritt aufweist:
jeweiliges Steuern der Anzahl der betriebenen Gasturbinen (1), der Verbrennungen der Gasturbinen (1), und der Verbrennung der Kanal-Brennkammer (31) während die Strömungsmenge des zweiten extrahierten Dampfs so gesteuert wird, dass die Strömungsmenge des Dampfs zur Verwendung als die Wärmequelle in der Entsalzungseinrichtung (14) für die Herstellung der gewünschten Frischwassermenge nicht unzureichend ist.

13. Das Verfahren des Betriebs des Kombikraftwerks zur Erzeugung elektrischer Energie und zur Wasserentsalzung gemäß einem der Ansprüche 1 bis 12, **dadurch gekennzeichnet, dass** die Entsalzungseinrichtung (14) Frischwasser (26) aus Meerwasser (33) herstellt.

14. Das Verfahren des Betriebs des Kombikraftwerks zur Erzeugung elektrischer Energie und zur Wasserentsalzung gemäß einem der Ansprüche 1 bis 12, **dadurch gekennzeichnet, dass** die Entsalzungseinrichtung (14) gereinigtes Wasser aus Austragswasser oder Abwasser herstellt.

15. Ein Kombikraftwerk zur Erzeugung elektrischer Energie und zur Wasserentsalzung, umfassend:
eine elektrische Energie erzeugende Kombizyklus-Einrichtung mindestens mit einer Gasturbine (1), wobei die mindestens eine Gasturbine einen Abgasboiler (9), der eine Kanal-Brennkammer (31) hat und Zuflusswasser durch Wärme eines Abgases, das von der Gasturbine (1) eingebracht wird erhitzt, um Dampf zu erzeugen, und eine Dampfturbine (11), die durch Verwendung des Dampfs, der durch den Abgasboiler (9) erzeugt wird, als ein Betriebsfluid angetrieben wird aufweist, wobei die elektrische Energie erzeugende Kombizyklus-Einrichtung mit einer Entsalzungseinrichtung (14) verbunden ist, die Frischwasser (26) durch Verwendung von Abdampf der Dampfturbine (11) als eine Wärmequelle herstellt, wobei das Kraftwerk (24) ferner eine Betriebsvorrichtung (59) aufweist, die eine Verbrennung der Kanal-Brennkammer (31) einstellt, und die einen Betrieb so ausführt, dass sowohl eine erzeugte elektrische Energiemenge als auch eine Frischwassermenge auf gewünschte Werte eingestellt werden,
**dadurch gekennzeichnet dass** die Betriebsvorrichtung umfasst:
eine elektrische Leistungsmesseinrichtung (58) für einen Gasturbinen-Stromgenerator (12), die eine elektrische Leistung des von der Gasturbine (1) angetriebenen Stromgenerators misst,
eine Strömungsmengen-Messeinrichtung (70), die eine Überschussdampfmenge des Turbinen-Abdampfs misst, der von der Dampfturbine (11) in die Entsalzungseinrichtung (14) strömt,
eine elektrische Power-Line-End-Leistungsmesseinrichtung (73), die einen elektrische Power-Line-End-Leistungswert misst, der durch Subtrahieren einer elektrischen Leistung, die durch einen Vorrichtungsbetrieb in dem Kraftwerk konsumiert wird, von einer elektrischen Leistung, die durch einen Stromgenerator für die Dampfturbine (11) und dem Stromgenerator für die Gasturbine (1) erzeugt wird, erhalten wird, und
ein Steuermittel (59), in das die elektrischen Leistungswerte und die durch die Messeinrichtungen gemessene Überschussdampfmenge eingegeben werden und das eine
Strömungsmenge von Brennstoff, der der Gasturbine (1) zugeführt wird, und eine Strömungsmenge von Brennstoff, der der Kanal-Brennkammer (31) zugeführt wird, die in dem Abgasboiler (9) angeordnet ist, so steuert, dass ein Betriebslastverhältnis der Gasturbine (1) erreicht wird, bei dem die Strömungsmenge des Dampfs von dem Abdampf der Dampfturbine (11), der nicht in der Entsalzungseinrichtung (14) verwendet wird, in einem Bereich von null bis zu einem vorbestimmten zugelassenen Wert ist.

## Revendications

1. Procédé de fonctionnement d'une centrale combinée pour la génération d'énergie électrique et de dessalement de l'eau comprenant :
une installation de génération d'énergie électrique à cycle combiné incluant une turbine à gaz (1), une chaudière de gaz d'échappement (9) comportant une chambre de combustion de tuyère (31) et chauffant de l'eau d'alimentation au moyen de la chaleur d'un gaz d'échappement introduit depuis la turbine à gaz pour générer de la vapeur, et une turbine à vapeur (11) actionnée en utilisant la vapeur générée par la chaudière de gaz d'échappement (9) en tant que fluide de travail, l'installation de génération d'énergie électrique à cycle combiné étant raccordée à une installation de dessalement de l'eau (14) qui fabrique de l'eau douce en utilisant la vapeur d'échappement de la turbine à gaz (11) en tant que source de chaleur, le rapport de charge de travail de la turbine à gaz (1) et de la combustion de la chambre de combustion de tuyère (31) étant réglé et une opération étant effectuée pour régler à la fois la quantité d'énergie électrique générée et la quantité d'eau douce à des valeurs désirées,
le procédé de fonctionnement étant **caractérisé en ce qu'**il comprend l'étape d'actionnement de la turbine à gaz (1) à un rapport de charge de travail pour lequel la quantité de vapeur excédentaire qui n'est pas utilisée dans l'installation de dessalement de l'eau (14) parmi la vapeur d'échappement de la turbine à gaz (11) se situe dans une plage allant de zéro jusqu'à une valeur admissible prédéterminée.

2. Procédé de fonctionnement d'une centrale combinée pour la génération d'énergie électrique et de dessalement de l'eau selon la revendication 1, **caractérisé en ce qu'**il comprend en outre les étapes consistant à :
mesurer le débit de la vapeur qui n'est pas utilisée dans l'installation de dessalement de l'eau pour obtenir la quantité de vapeur excédentaire ; et
commander respectivement la combustion de la turbine à gaz (1), la combustion de la chambre de combustion de tuyère (31) et le débit de la vapeur destinée à être utilisée en tant que source de chaleur de l'installation de dessalement de l'eau (14), pour obtenir un rapport de charge de travail de la turbine à gaz (1) pour lequel la quantité de vapeur excédentaire se situe dans la plage allant de zéro jusqu'à la valeur admissible prédéterminée.

3. Procédé de fonctionnement d'une centrale combinée pour la génération d'énergie électrique et de dessalement de l'eau comprenant :
une installation de génération d'énergie électrique à cycle combiné incluant une pluralité de turbines à gaz (1), chaque turbine à gaz (1) comportant une chaudière de gaz d'échappement (9) comportant une chambre de combustion de tuyère (31) et chauffant de l'eau d'alimentation au moyen de la chaleur d'un gaz d'échappement introduit depuis la turbine à gaz (1) pour générer de la vapeur, et une turbine à vapeur (11) actionnée en utilisant la vapeur générée par la chaudière de gaz d'échappement (9) en tant que fluide de travail, l'installation de génération d'énergie électrique à cycle combiné étant raccordée à une installation de dessalement de l'eau (14) qui fabrique de l'eau douce en utilisant la vapeur d'échappement de la turbine à gaz (11) en tant que source de chaleur, le nombre de turbines à gaz en fonctionnement (1), le rapport de charge de travail de la turbine à gaz (1) et de la combustion de la chambre de combustion de tuyère (31) étant réglé et une opération étant effectuée pour fixer à la fois la quantité d'énergie électrique générée et la quantité d'eau douce à des valeurs désirées,
le procédé de fonctionnement étant **caractérisé en ce qu'**il comprend les étapes consistant à :
fixer le nombre de turbines à gaz en fonctionnement (1) au nombre minimum de turbines à gaz en fonctionnement capables d'obtenir la quantité d'énergie électrique générée désirée ; et
actionner le nombre minimum de turbines à gaz en fonctionnement (1) à un rapport de charge de travail pour lequel la quantité de vapeur excédentaire (15) qui n'est pas utilisée dans l'installation de dessalement de l'eau (14) parmi la vapeur d'échappement de la turbine à gaz (11) se situe dans une plage allant de zéro jusqu'à une valeur admissible prédéterminée.

4. Procédé de fonctionnement d'une centrale combinée pour la génération d'énergie électrique et de dessalement de l'eau selon la revendication 3, **caractérisé en ce que** le nombre de turbines à gaz en fonctionnement (1) est égal au nombre de turbines à gaz en fonctionnement avec lesquelles la quantité d'énergie électrique générée désirée peut être obtenue et avec lesquelles toutes les températures de sortie de la chambre de combustion de tuyère (31) sont inférieures ou égales à des températures admissibles.

5. Procédé de fonctionnement d'une centrale combinée pour la génération d'énergie électrique et de dessalement de l'eau selon la revendication 3 ou la revendication 4, **caractérisé en ce qu'**il comprend en outre les étapes consistant à :
mesurer le débit de la vapeur qui n'est pas utilisée dans l'installation de dessalement de l'eau (14) pour obtenir la quantité de vapeur excédentaire ; et
commander respectivement le nombre de turbines à gaz en fonctionnement (1), la combustion de la turbine à gaz (1), la combustion de la chambre de combustion de tuyère (31) et le débit de la vapeur destinée à être utilisée en tant que source de chaleur de l'installation de dessalement de l'eau (14), pour obtenir un rapport de charge de travail de la turbine à gaz (1) pour lequel la quantité de vapeur excédentaire se situe dans la plage allant de zéro jusqu'à la valeur admissible prédéterminée.

6. Procédé de fonctionnement d'une centrale combinée pour la génération d'énergie électrique et de dessalement de l'eau selon l'une quelconque des revendications 3 à 5, **caractérisé en ce qu'**il comprend en outre les étapes consistant à :
mesurer respectivement le débit de la vapeur qui n'est pas utilisée dans l'installation de dessalement de l'eau (14) et la température de sortie de la chambre de combustion de tuyère (31),
commander le nombre de turbines à gaz en fonctionnement (1) au nombre minimum de turbines à gaz en fonctionnement avec lesquelles toutes les températures de sortie de la chambre de combustion de tuyère (31) sont inférieures ou égales à des températures admissibles en se basant sur la valeur mesurée de la température de sortie de la chambre de combustion de tuyère (31) ; et
commander la combustion de la turbine à gaz (1), la combustion de la chambre de combustion de tuyère (31) et le débit de la vapeur destinée à être utilisée en tant que source de chaleur de l'installation de dessalement de l'eau (14), en se basant sur la valeur mesurée du débit de la vapeur qui n'est pas utilisée dans l'installation de dessalement de l'eau (14) pour obtenir un rapport de charge de travail de la turbine à gaz (1) pour lequel la quantité de vapeur excédentaire (15) se situe dans la plage allant de zéro jusqu'à la valeur admissible prédéterminée.

7. Procédé de fonctionnement d'une centrale combinée pour la génération d'énergie électrique et de dessalement de l'eau selon l'une quelconque des revendications 1 à 6, **caractérisé en ce qu'**il comprend en outre les étapes consistant à :
faire circuler de la première vapeur extraite, extraite de la chaudière de gaz d'échappement (9) en tant que fluide de travail d'un éjecteur ; et
diminuer la pression dans la ligne d'eau douce de l'installation de dessalement de l'eau (14) au moyen de l'éjecteur.

8. Procédé de fonctionnement d'une centrale combinée pour la génération d'énergie électrique et de dessalement de l'eau selon l'une quelconque des revendications 1 à 7, **caractérisé en ce qu'**il comprend en outre les étapes consistant à :
faire circuler de la deuxième vapeur extraite, extraite de la chaudière de gaz d'échappement (9) en tant que fluide de travail d'un compresseur thermique (23) ;
augmenter la pression de la vapeur d'échappement de la turbine à vapeur (11) au moyen du compresseur thermique (23) ; et
fournir la vapeur à l'installation de dessalement de l'eau (14).

9. Procédé de fonctionnement d'une centrale combinée pour la génération d'énergie électrique et de dessalement de l'eau selon l'une quelconque des revendications 1 à 8, **caractérisé en ce qu'**il comprend en outre les étapes consistant à :
mélanger de la troisième vapeur extraite, extraite de la chaudière de gaz d'échappement (9) avec la vapeur d'échappement de la turbine à vapeur (11) ;
fournir la troisième vapeur extraite en tant que source de chaleur destinée à être utilisée dans l'installation de dessalement de l'eau (14) ; et
permuter le fonctionnement pour fixer le rapport de charge de travail de la turbine à gaz (1) à une valeur capable d'obtenir une quantité d'énergie électrique générée désirée.

10. Procédé de fonctionnement d'une centrale combinée pour la génération d'énergie électrique et de dessalement de l'eau selon la revendication 9, **caractérisé en ce qu'**il comprend en outre l'étape consistant à :
commander respectivement le nombre de turbines à gaz en fonctionnement (1), les combustions des turbines à gaz (1) et la combustion de la chambre de combustion de tuyère (31), en commandant le débit de la troisième vapeur extraite de sorte que le débit de la vapeur destinée à être utilisée en tant que source de chaleur dans l'installation de dessalement de l'eau (14) n'est pas insuffisant pour la fabrication de la quantité d'eau douce désirée.

11. Procédé de fonctionnement d'une centrale combinée pour la génération d'énergie électrique et de dessalement de l'eau selon la revendication 8, **caractérisé en ce qu'**il comprend en outre l'étape consistant à :
augmenter le débit de la deuxième vapeur extraite circulant dans le compresseur thermique (23) de façon que le fonctionnement puisse être permuté pour fixer le rapport de charge de travail de la turbine à gaz (1) a une valeur permettant d'obtenir la quantité d'énergie électrique générée désirée.

12. Procédé de fonctionnement d'une centrale combinée pour la génération d'énergie électrique et de dessalement de l'eau selon la revendication 11, **caractérisé en ce qu'**il comprend en outre l'étape consistant à :
commander respectivement le nombre de turbines à gaz en fonctionnement (1) les combustions des turbines à gaz (1) et la combustion de la chambre de combustion de tuyère (31), en commandant le débit de la deuxième vapeur extraite de sorte que le débit de la vapeur destinée à être utilisé en tant que source de chaleur dans l'installation de dessalement de l'eau (14) n'est pas insuffisant pour la fabrication de la quantité d'eau douce désirée.

13. Procédé de fonctionnement d'une centrale combinée pour la génération d'énergie électrique et de dessalement de l'eau selon l'une quelconque des revendications 1 à 12, **caractérisé en ce que** l'installation de dessalement de l'eau (14) fabrique de l'eau douce (26) à partir d'eau de mer (33).

14. Procédé de fonctionnement d'une centrale combinée pour la génération d'énergie électrique et de dessalement de l'eau selon l'une quelconque des revendications 1 à 12, **caractérisé en ce que** l'installation de dessalement de l'eau (14) fabrique de l'eau purifiée à partir d'eau évacuée ou d'eau usée.

15. Centrale combinée pour la génération d'énergie électrique et de dessalement de l'eau comprenant : une installation de génération d'énergie électrique à cycle combiné incluant au moins une turbine à gaz (1), l'au moins une turbine à gaz comportant une chaudière de gaz d'échappement (9) comportant une chambre de combustion de tuyère (31) et chauffant de l'eau d'alimentation au moyen de la chaleur d'un gaz d'échappement introduit depuis la turbine à gaz (1) pour générer de la vapeur, et une turbine à vapeur (11) actionnée en utilisant la vapeur générée par la chaudière de gaz d'échappement (9) en tant que fluide de travail, l'installation de génération d'énergie électrique à cycle combiné étant raccordée à une installation de dessalement de l'eau (14) qui fabrique de l'eau douce (26) en utilisant la vapeur d'échappement de la turbine à gaz (11) en tant que source de chaleur, l'installation (24) comprenant en outre un dispositif d'actionnement (59) qui règle la combustion de la chambre de combustion de tuyère (31) et qui effectue une opération pour régler à la fois la quantité d'énergie électrique générée et la quantité d'eau douce à des valeurs désirées,
**caractérisé en ce que** le dispositif d'actionnement comprend :
un appareil de mesure de puissance électrique (58) pour un générateur d'énergie électrique à turbine à gaz (12) qui mesure la puissance électrique du générateur d'énergie électrique entraîné par la turbine à gaz (1) ;
un débitmètre (70) qui mesure la quantité de vapeur excédentaire de la vapeur d'échappement de la turbine circulant depuis la turbine à gaz (11) dans l'installation de dessalement de l'eau (14) ;
un appareil de mesure de puissance électrique d'extrémité de ligne d'énergie électrique (73) qui mesure la valeur de la puissance électrique d'extrémité de ligne d'énergie électrique obtenue par soustraction de la puissance électrique consommée par le fonctionnement d'un dispositif dans l'installation par rapport à la puissance électrique générée par un générateur d'énergie électrique pour la turbine à vapeur (11) et par un générateur électrique pour la turbine à gaz (1) ; et
un moyen de commande (59) dans lequel sont appliquées en entrée les valeurs de puissance électrique et la quantité de vapeur excédentaire, mesurées par les appareils de mesure, et qui commande le débit d'un carburant délivré à la turbine à gaz (1) et le débit d'un carburant délivré à la chambre de combustion de tuyère (31) disposée dans la chaudière à gaz d'échappement (9) pour obtenir le rapport de charge de travail de la turbine à gaz (1) pour lequel le débit de la vapeur qui n'est pas utilisée dans l'installation de dessalement de l'eau (14) parmi la vapeur d'échappement de la turbine à gaz (11) se situe dans une plage allant de zéro jusqu'à une valeur admissible prédéterminée.
